# EUROPEAN PATENT APPLICATION

(11) **EP 4 395 434 A1**
(43) Date of publication of application: **03.07.2024**
(21) Application number: 21954497.0
(22) Date of filing: 24.08.2021
(51) Int. Cl.: H04W 72/04, G06N 3/02

(54) **MODEL TRANSMISSION METHOD AND APPARATUS**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); XU, Yang, Dongguan, Guangdong 523860 (CN)
(74) Representative: Grassi, Stefano
(86) International application number: PCT/CN2021/114383
(87) International publication number: WO 2023/023954

(57) **Abstract**

Provided in the embodiments of the present application are a model transmission method and apparatus. The method comprises: a terminal device receiving model transmission control information from a network device, and then, receiving a model from the network device according to the model transmission control information. By means of acquiring model transmission control information, resource configurations for model transmission are acquired, and a model is acquired on the basis of the resource configurations for model transmission, such that the effectiveness and reliability of model transmission are both taken into consideration.

## Description

### TECHNICAL FIELD

The present disclosure relates to the field of communications and more particularly to a model transmission method and a model transmission apparatus.

### BACKGROUND

In recent years, researches of Artificial Intelligence (AI for short) and achievements related to the researches have achieved good results in many fields, and become a new way for people to try to solve and deal with problems. For example, AI models, neural network models and other different types of models are widely used in pattern recognition, signal processing and other fields.

Model-based applications of a terminal device can be implemented through model-based acquisition, in which some models can be pre-configured in the terminal device, while other models can only be downloaded online. In the process of online downloading, the network device side mainly transmits the configured model to the terminal device.

However, due to the large amount of data of the model downloaded online, the current solution of transmitting the model in segments through a large number of Radio Resource Control (RRC for short) signaling messages has low transmission efficiency and cannot guarantee reliability.

### SUMMARY

The embodiments of the present disclosure provide a model transmission method and a model transmission apparatus, which improve the reliability of model transmission.

In a first aspect, an embodiment of the present disclosure provides a model transmission method, applied to a terminal device and including the following operations.

Model transmission control information is received from a network device. The model transmission control information is used for configuring resources for transmission of model(s).

Based on the model transmission control information, the model(s) are received from the network device.

In a second aspect, an embodiment of the present disclosure provides a model transmission method, applied to a network device and including the following operations.

Model transmission control information is sent to a terminal device. The model transmission control information is used for configuring resources for transmission of model(s).

Based on the model transmission control information, the model(s) are sent to the terminal device.

In a third aspect, an embodiment of the present disclosure provides a model transmission apparatus, which includes a first receiving module and a second receiving module.

The first receiving module is configured to receive, from a network device, model transmission control information. The model transmission control information is used for configuring resources for transmission of model(s).

The second receiving module is configured to receive, based on the model transmission control information, the model(s) from the network device.

In a fourth aspect, an embodiment of the present disclosure provides a model transmission apparatus, which includes a first sending module and a second sending module.

The first sending module is configured to send, to a terminal device, model transmission control information. The model transmission control information is used for configuring resources for transmission of model(s).

The second sending module is configured to send, based on the model transmission control information, the model(s) to the terminal device.

In a fifth aspect, an embodiment of the present disclosure provides a terminal device, which includes a transceiver; a processor and a memory.

The memory stores computer executable instructions.

The processor is configured to execute the computer executable instructions stored in the memory, to cause the processor to perform the model transmission method as described in the first aspect.

In a sixth aspect, an embodiment of the present disclosure provides a network device, which includes a transceiver; a processor and a memory.

The memory stores computer executable instructions.

The processor is configured to execute the computer executable instructions stored in the memory, to cause the processor to perform the model transmission method as described in the second aspect.

In a seventh aspect, an embodiment of the present disclosure provides a computer readable storage medium having stored thereon computer executable instructions that, when executed by a processor, cause a computer to perform the model transmission method as described in any one of the first to second aspects.

In an eighth aspect, an embodiments of the present disclosure provide a computer program product including a computer program that, when executed by a processor, causes a computer to perform the model transmission method as described in any one of the first to second aspects.

The model transmission method and the model transmission apparatus according to the embodiments of the present disclosure, firstly, a terminal device receives model transmission control information from a network device; and then receives, based on the model transmission control information, model(s) from the network device. By obtaining the model transmission control information, resource allocation of transmission of the model(s) is obtained, and the model(s) is obtained based on the resource allocation of the transmission of the model(s), so that both the effectiveness and reliability of model transmission are taken into account.

### BRIEF DESCRIPTION OF THE DRAWINGS

FIG. 1 is a diagram of a user plane protocol stack.
FIG. 2 is a diagram of a model transmission scenario according to an embodiment of the present disclosure.
FIG. 3 is a diagram of a structure of a neural network.
FIG. 4 is a diagram of a structure of a multi-hidden layer neural network.
FIG. 5 is a diagram of a structure of a convolution neural network.
FIG. 6 is a flowchart of a model transmission method according to an embodiment of the present disclosure.
FIG. 7 is a diagram of model transmission according to an embodiment of the present disclosure.
FIG. 8 is a first diagram of a model data adaptation protocol layer according to an embodiment of the present disclosure.
FIG. 9 is a second diagram of a model data adaptation protocol layer according to an embodiment of the present disclosure.
FIG. 10 is a third diagram of a model data adaptation protocol layer according to an embodiment of the present disclosure.
FIG. 11 is a fourth diagram of a model data adaptation protocol layer according to an embodiment of the present disclosure.
FIG. 12 is a flowchart of a model transmission method according to an embodiment of the present disclosure.
FIG. 13 is a first diagram of a structure of a model transmission apparatus according to an embodiment of the present disclosure.
FIG. 14 is a second diagram of a structure of a model transmission apparatus according to an embodiment of the present disclosure.
FIG. 15 is a diagram of a structure of a terminal device according to an embodiment of the present disclosure.
FIG. 16 is a diagram of a structure of a network device according to an embodiment of the present disclosure.

### DETAILED DESCRIPTION

In order to better understand the technical solution of the present disclosure, the related concepts and related technologies involved in the present disclosure are introduced as follows.

A terminal device may be a device that includes wireless transceiver functions and can cooperate with a network device to provide communication services for users. Specifically, the terminal device may refer to User Equipment (UE), an access terminal, a subscriber unit, a subscriber station, a mobile station, a mobile platform, a remote station, a remote terminal, a mobile device, a user terminal, a terminal, a wireless communication device, a user agent, or a user device. For example, the terminal device may be a cellular phone, a cordless phone, a Session Initiation Protocol (SIP) phone, a Wireless Local Loop (WLL) station, a Personal Digital Assistant (PDA), a handheld device having wireless communication functionality, a computing device or other processing devices connected to a wireless modem, a vehicle-mounted device, a wearable device, a terminal device in a future fifth generation (5G) network or a future evolved public land mobile network (PLMN) after the 5G and/or the like. Embodiments of the present disclosure are not limited thereto.

By way of example but not limitation, in the embodiments of the present disclosure, the terminal device may also be a wearable device. The wearable device can also be called a wearable intelligent/smart device, which is a general name of wearable devices (such as glasses, gloves, watches, clothing and shoes) developed through intelligently designing daily wear by applying wearable technologies. The wearable device is a portable device that is worn directly on the body or integrated into the user's clothes or accessories. The wearable device is not only a kind of hardware device, but also realizes powerful functions through software support, data interaction and cloud interaction. The generalized wearable smart device includes devices that have full functions and a large size, which can realize complete or partial functions without relying on smart phones, such as smart watches or smart glasses. In addition, the generalized wearable smart device further includes devices that only focus on a certain kind of application function, which need to be used in conjunction with other devices (e.g., smart phones), such as various smart bracelets and smart jewelry for monitoring physical signs.

In addition, in the embodiments of the present disclosure, the terminal device can also be the terminal device in a system of internet of things (IoT). The IoT is an important part of the development of information technology in the future, and the main technical feature of the IoT is to connect things to the network through communication technologies, so as to realize the intelligent network of man-machine interconnection and thing-thing interconnection. In the embodiments of the present disclosure, the IOT technology can achieve, through e.g., narrow band (NB) technologies, massive connection, deep coverage and terminal power saving.

A network device may be a device for communicating with the terminal device. For example, the network device may be a Base transceiver Station (BTS) in a Global System for Mobile Communications (GSM) or in a Code Division Multiple Access (CDMA) communication system, a base station (NodeB, NB) in a Wideband Code Division Multiple Access (WCDMA) system, an evolutional Node B (eNB or eNodeB) in a Long Term Evolution (LTE) system. Or the network device may be a relay station, an access point, a vehicle-mounted device, a wearable devices, a network side device in the future 5G network or networks after the 5G, or a network device in future evolved Public Land Mobile Network (PLMN) networks, or the like.

The network device in the embodiments of the present disclosure may also be referred to as a Radio Access Network (RAN) device. The RAN device is connected to the terminal device for receiving data from the terminal device and sending the data to a core network device. The RAN device corresponds to different devices in different communication systems. For example, the RAN device may be a base station and a base station controller in the second generation (2G) system, the RAN device may be a base station and a Radio Network Controller (RNC) in the third generation (3G) system, the RAN device may be an evolutional Node B (eNB) in the fourth generation (4G) system, and the RAN device may be an access network device (e.g., gNB, centralized unit (CU), distributed unit (DU)) in the 5G system, such as New Radio (NR) in the 5G system.

### RRC: Radio Resource Control.

### RB: Radio Bearer.

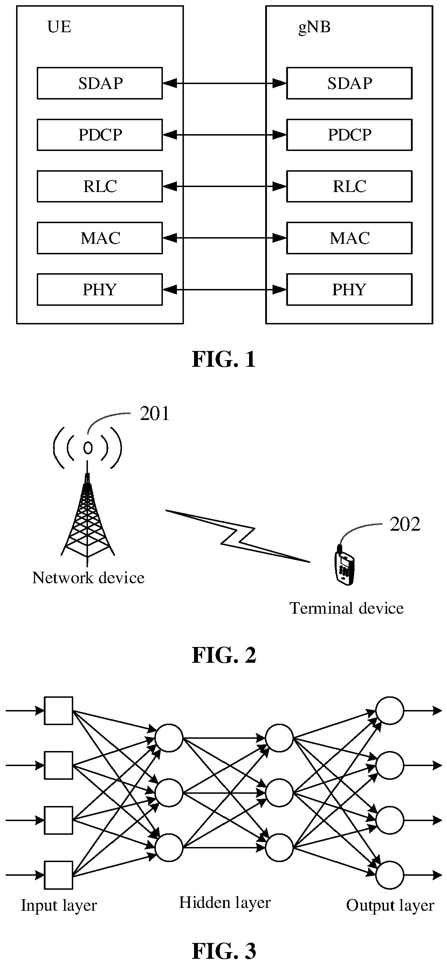

The user plane protocol stack is introduced with reference to the accompanying drawings. A user plane refers to a protocol stack and related processes for transmitting UE data, and what corresponds to the user plane is a control plane which refers to a protocol stack and related processes for transmitting control signaling. FIG. 1 is a diagram of a user plane protocol stack. As illustrated in FIG. 1, an NR user plane protocol stack includes five protocol sub-layers: a Service Data Adaptation Protocol (SDAP for short) layer, a Packet Data Convergence Protocol (PDCP for short) layer, a Radio Link Control (RLC for short) layer, a Medium Access Control (MAC for short) layer and a Physical (PHY for short) layer.

The SDAP layer is a newly added protocol layer in the 5G NR user plane compared to the LTE user plane. The SDAP layer is mainly responsible for the mapping between Quality of Service (QoS for short) flows and Data Radio Bearers (DRBs for short). The PDCP layer is responsible for encryption and decryption, integrity protection, header compression, serial number maintenance, reordering and sequential submission and the like. The RLC layer is responsible for segmentation, reassembly, error detection and like of an RLC Service Data Unit (SDU for short) data packet. The MAC layer is responsible for mapping, multiplexing and de-multiplexing between the logical channel and the transmission channel, uplink and downlink scheduling related processes, random access processes, and the like.

A flow for the user plane to process data is as follows. At first, user plane data reaches the SDAP layer through QoS flows. The SDAP layer maps the data of different QoS flows to different DRBs; adds, according to network configuration, identifiers of the QoS flows to the data; and generates an SDAP Packet Data Unit (PDU for short) and submits the SDAP PDU to the PDCP layer. The PDCP layer processes the SDAP PDU; and generates a PDCP PDU and submits the PDCP PDU to the RLC layer. The RLC layer processes an RLC SDU according to the configured RLC model.

Hereinafter, a scenario that the model transmission method in the present disclosure applies will be described with reference to FIG. 2.

FIG. 2 is a diagram of a model transmission scenario according to an embodiment of the present disclosure. Referring to FIG. 2, the model transmission scenario includes a network device 201 and a terminal device 202. Wireless communication may be performed between the network device 201 and the terminal device 202. The terminal device 202 may communicate with at least one core network via a Radio Access Network (RAN).

The communication system can be a Global System of Mobile communication (GSM for short) system, a Code Division Multiple Access (CDMA for short) system, a Wideband Code Division Multiple Access (WCDMA for short) system, an LTE system or a 5th-Generation (5G for short) system.

Accordingly, the network device may be a base station (Base Transceiver Station, BTS for short) in a GSM system or in a CDMA system, a base station (NodeB, NB for short) in a WCDMA system, an evolved base station (evolved NodeB, eNB for short), an access point (AP) or a relay station in an LTE system, or a base station in a 5G system, or the like, which are not limited in the present disclosure.

The 5G mobile communication system discussed in the present disclosure includes a non-standalone (NSA) 5G mobile communication system and/or a standalone (SA) 5G mobile communication system. The technical solutions provided by the present disclosure can also be applied to future communication systems, such as the sixth generation mobile communication system. The communication system may also be a PLMN network, a device-to-device (D2D) network, a machine to machine (M2M) network, an IoT network, or other networks.

It can be understood that if the technical solutions of the embodiments of the present disclosure are applied to other wireless communication networks, the corresponding names can also be replaced with names of corresponding functions in other wireless communication networks.

The network architecture and service scenario described in the embodiments of the present disclosure are intended to more clearly explain the technical solutions of the embodiments of the present disclosure and do not constitute a limitation to the technical solutions provided by the embodiments of the present disclosure. Those of ordinary skill in the art know that with the evolution of the network architecture and the emergence of new service scenarios, the technical solutions provided by the embodiments of the present disclosure are equally applicable to similar technical problems.

On the basis of the above introduction, the related technical background of the present disclosure is explained below.

Current wireless communication systems provide greater flexibility than ever before and emphasize wide applicability to different scenarios and full utilization of limited resources. However, at present, the basic principles of most of the work are completed based on theoretical modeling on the actual communication environment or simple parameter selection. The gain brought by such a basic way of working gradually decreases in the changeable scene and complex communication environment. In view of this situation, at present, it is necessary to adopt new methods and ideas, combined with traditional wireless communication theories and systems, so as to find another way to break the performance bottleneck and further improve the performance of the wireless communication system.

With the development of artificial intelligence and big data analysis technology, AI models, machine learning models and other different types of models are widely used in intelligent data analysis. In the field of communications, the terminal device is increasingly introducing various models for intelligent operations, such as speech recognition, image processing, user behavior prediction, and the like, so that the terminal device can serve more service scenarios.

The process of intelligent operations of the terminal device based on the model is inseparable from the acquisition of the model, where some models can be pre-configured on the terminal device side, and some models can only be obtained by relying on the process of online downloading. The model that needs to be downloaded online is configured on the network device side, and when the terminal device needs to obtain the model, the network device transmits the model to the terminal device.

At present, model transmission is performed between the network device and the terminal device. The model transmission includes transmission based on a control plane signaling radio bearer (SRB) process or transmission based on a DRB process. In the transmission based on the SRB process, the model is mainly transmitted in segments through a large number of RRC signaling messages. In the transmission based on the DRB process, the model is mainly transmitted as user plane data.

However, for a model that needs to be downloaded online, the amount of model data of the model is usually large. Taking an artificial intelligence model as an example, researches of artificial intelligence and related achievements of the reaches have achieved good results in many fields, and have become a new way for people to try to solve and deal with problems. Among these researches, the research of artificial intelligence based on the neural network is an extremely important part.

FIG. 3 is a diagram of a structure of a neural network. As illustrated in FIG. 3, a basic structure of a simple neural network includes an input layer, a hidden layer and an output layer. The input layer is responsible for receiving data, the hidden layer is responsible for processing the data, and the output layer is used for producing the final result.

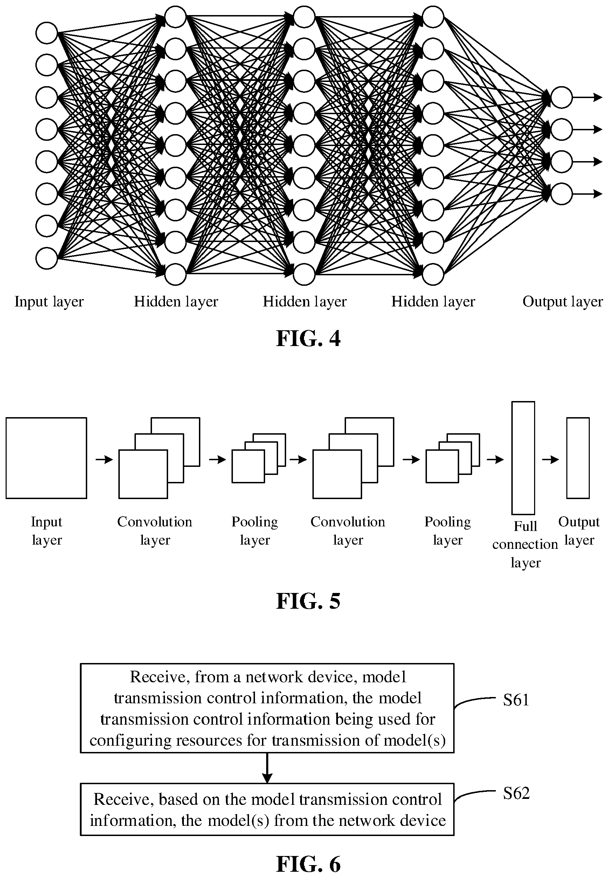

With the continuous development of the neural network research, neural network deep learning algorithms have been proposed. FIG. 4 is a diagram of a structure of a multi-hidden layer neural network. As illustrated in FIG. 4, the structure of the multi-hidden layer neural network greatly improves the processing ability of the network, and is widely used in pattern recognition, signal processing, optimal combination, anomaly detection and so on.

Similarly, with the development of deep learning, convolution neural networks have been further studied. FIG. 5 is a diagram of a structure of a convolution neural network. As illustrated in FIG. 5, a basic structure of a convolution neural network includes an input layer, multiple convolution layers, multiple pooling layers, a full connection layer and an output layer. The introduction of the convolution layer and the pooling layer effectively controls the sharp increase of network parameters, limits the number of parameters, excavates the characteristics of local structures, and improves the robustness of the algorithm.

The neural network models illustrated in FIGS. 3 to 5 have the large amount of model data which ranges from tens to thousands of megabits. When the transmission based on the SRB process is adopted, because the data transmitted by each RRC signaling is limited, a large number of RRC signaling is required for performing transmission in segments. This transmission in segments will reduce the effectiveness and reliability of successful reception of the model, and transmission of the model through a large number of RRC signaling will obstruct the transmission of other control signaling carried by the SRB. When the transmission based on the DRB process is adopted, the reliability of transmission of data is determined by a logical channel mode associated with each DRB (i.e., one of a transparent mode, an acknowledgement mode and a non-acknowledgement mode is selected, in which only the acknowledgement mode can realize retransmission at a granularity of data packet). Once the logical channel mode associated with each DRB is determined, reliability processing of all data through the DRB is the same. This retransmission mechanism with the granularity of data packet is not flexible enough, and the pursuit of the reliability of each data packet means that effectiveness of the overall transmission of model data becomes worse, which makes it difficult to realize the overall efficient transmission of large-capacity model data and the effective and reliable retransmission of partial model data at the same time.

Based on this, an embodiment of the present disclosure provides a model transmission method to take into account the effectiveness and reliability of transmission of model data. The technical solution of the present disclosure will be introduced below.

FIG. 6 is a flowchart of a model transmission method according to an embodiment of the present disclosure, and the method is applied to a terminal device. As illustrated in FIG. 6, the method includes the following operations.

In S61, model transmission control information is received from a network device, where the model transmission control information is used for configuring resources for transmission of model(s).

The model in the embodiments of the present disclosure is a model configured on a network device side and transmitted to the terminal device by the network device. The model can be a large-capacity model, which refers to the model with relatively large amount of model data. The large-capacity model may include, for example, an AI model, an encryption model, a correction model, and the like.

Large-capacity model data, such as AI model data, encryption model data, correction model data and the like, has the characteristics of large capacity, strong logical correlation of data, and high requirements for data integrity and reliability.

Therefore, before transmission of model(s) is performed, the network device first sends, to the terminal device, model transmission control information for configuring resources for the transmission of the model(s).

The resources for the transmission of the model(s) may include, for example, configuration of RB(s) for the transmission of the model(s), security configuration for the transmission of the model(s), whether to perform overall transmission (or transmission as a whole) or transmission in blocks during the transmission of the model(s), how to judge whether the transmission is successful, how to perform retransmission if the transmission fails, and so on.

In S62, based on the model transmission control information, the model(s) are received from the network device.

After receiving the model transmission control information, the terminal device can know how the network device performs the transmission of the model(s), and then the terminal device receives the model(s) based on the model transmission control information.

In the model transmission method according to the embodiment of the present disclosure, firstly, a terminal device receives model transmission control information from a network device; and then receives, based on the model transmission control information, model(s) from the network device. By obtaining the model transmission control information, configuration of resources for transmission of the model(s) is obtained, and the model(s) is obtained based on the configuration of resources for the transmission of the model(s), so that the effectiveness and reliability of the transmission of model data are taken into account.

The solutions of the present disclosure are described in detail with reference to the accompanying drawings.

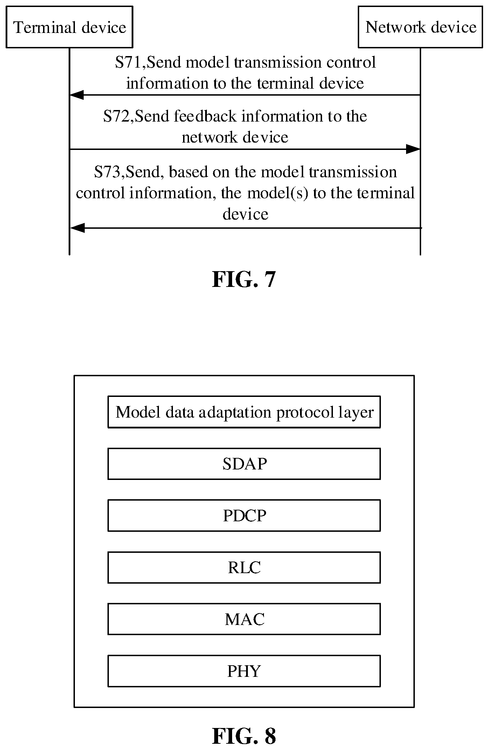

FIG. 7 is a diagram of model transmission according to an embodiment of the present disclosure. As illustrated in FIG. 7, the model transmission includes the following operations.

In S71, the network device sends model transmission control information to the terminal device.

Before transmitting the model(s), the network device firstly sends, to the terminal device, the model transmission control information for configuring resources for transmission of the model(s) for the terminal device. The network device can directly send the model transmission control information to the terminal device. Alternatively, the network device can send a control message to the terminal device, and the control message includes the model transmission control information. The terminal device receives the control message from the network device and obtains the model transmission control information based on the control message. In an embodiment, the control message can be an RRC message.

The terminal device receives the model transmission control information from the network device. The model transmission control information includes at least one of: model type identifiers), model data size indication information, configuration of at least one radio bearer RB that is required to be added or modified and is associated with the transmission of the model(s), configuration of at least one RB that is required to be deleted and is associated with the transmission of the model(s), or security configuration related to the transmission of the model(s), which are described respectively below.

The model type identifier(s) is used to identify a model or a type of models. There is one-to-one correspondences or one-to-many correspondences (for a scenario where one model identifier corresponds to a type of models) between the model type identifier(s) and the model(s). When the network device needs to transmit a certain model or a certain type of models to the terminal device, the model transmission control information may include a model type identifier of the model(s). The network device can simultaneously transmit one or more models to the terminal device. Before the transmission, the model transmission control information sent by the network device can include model type identifier(s) of the one or more models.

The model data size indication information is used to indicate a size of a memory occupied by a model. The model data size indication information can be used to detect whether transmission of the model is successful. For example, the network device needs to transmit an AI model to the terminal device. Before transmitting the AI model, the network device sends the model transmission control information to the terminal device, where the model transmission control information includes model data size indication information of the AI model which indicates that a memory occupied by the AI model has a size of 100M. After the network device transmits the AI model to the terminal device, if a size of the model data received by the terminal device is only 90M, it means that the AI model is not successfully received. When one model is required to be transmitted, the model transmission control information may or may not include the model data size indication information of the model. When multiple models are required to be transmitted, the model transmission control information may not include the model data size indication information, or may include model data size indication information of part of the models, or may include model data size indication information of all the models.

The configuration of at least one RB that is required to be added or modified and is associated with the transmission of the model(s).

The configuration of at least one RB that is required to be deleted and is associated with the transmission of the model(s).

The transmission of the model(s) needs to be controlled based on RB resources, and therefore configuration of RB(s) needs to be performed in advance. The configuration of the RB(s) may include configuration of at least one RB that is required to be added or modified and is associated with the transmission of the model(s), and may further include configuration of at least one RB that is required to be deleted and is associated with the transmission of the model(s). The configuration of the RB(s) associated with the transmission of the model(s) will be described in detail in subsequent embodiments.

The security configuration related to the transmission of the model(s) is related configuration used to ensure subsequent secure transmission of model(s), which may include security algorithms, keys, verification algorithms, and/or the like. The security configuration related to the transmission of the model(s) will be described in detail in subsequent embodiments.

The model transmission control information includes at least one of the above configuration parameters. Part of the configuration parameters in the model transmission control information may have different configuration forms which, for example, may include a configuration form centered on the model type identifier, and may also include a configuration form centered on the RB identifier.

For the configuration form centered on the model type identifier, if the model transmission control information includes the model data size indication information, the model data size indication information is model data size indication information corresponding to the model type identifier(s); if the model transmission control information includes the configuration of the at least one RB that is required to be added or modified and is associated with the transmission of the model(s), the configuration of the at least one RB that is required to be added or modified and is associated with the transmission of the model(s) is configuration of RB(s), that are required to be added or modified and are associated with the transmission of the model(s), corresponding to the model type identifier(s); and if the model transmission control information includes the configuration of the RB(s) that are required to be deleted and are associated with the transmission of the model(s), the configuration of the RB(s) that are required to be deleted and are associated with the transmission of the model(s) is configuration of RB(s), that are required to be deleted and are associated with the transmission of the model(s), corresponding to the model type identifier(s). That is, configuration parameters in this configuration form are distinguished by the model type identifiers.

Table 1 illustrates the configuration form centered on the model type identifier. As illustrated in Table 1, for example, transmission configuration of two models is configured at the same time, and model type identifiers of the two models are an identifier 1 and an identifier 2, respectively. Under the model type identifier 1, it may include: model data size indication information corresponding to the model type identifier 1; configuration of RB(s), that are required to be added or modified and are associated with the transmission of the model, associated with the model type identifier 1; and configuration of RB(s), that are required to be deleted and are associated with the transmission of the model, associated with the model type identifier 1. Under the model type identifier 2, it may include: model data size indication information corresponding to the model type identifier 2; configuration of RB(s), that are required to be added or modified and are associated with the transmission of the model, associated with the model type identifier 2; and configuration of RB(s), that are required to be deleted and are associated with the transmission of the model, associated with the model type identifier 2.

**Table 1**

| Model transmission control information | | | |
|---|---|---|---|
| Model type identifier 1 | | Model type identifier 2 | |
| Model data size indication information corresponding to the model type identifier 1 | | Model data size indication information corresponding to the model type identifier 2 | |
| Configuration of RB(s), that are required to be added or modified and are associated with the transmission of the model, associated with the model type identifier 1 | Configuration of RB(s), that are required to be deleted and are associated with the transmission of the model, associated with the model type identifier 1 | Configuration of RB(s), that are required to be added or modified and are associated with the transmission of the model, associated with the model type identifier 2 | Configuration of RB(s), that are required to be deleted and are associated with the transmission of the model, associated with the model type identifier 2 |

In Table 1, the configuration of RB resources is configured under specific model type identifier(s). The first layer of the configuration is the model type identifier, and the second layer of the configuration is the corresponding RB resources. This configuration form is the configuration form centered on the model type identifier

For the configuration form centered on the RB identifier, model-related configuration is configured at the next level to the configuration of RB(s).

Table 2 illustrates the configuration form centered on the RB identifier. As illustrated in Table 2, for example, transmission configuration of two models is configured at the same time. In Table 2, the model-related configuration is configured under specific RB identifier(s). The first layer of the configuration is the RB identifier, and the second layer of the configuration is the model-related configuration associated with the corresponding RB identifier. This configuration form is the configuration form centered on the RB identifier.

**Table 2**

| Model transmission control information | | | | | |
|---|---|---|---|---|---|
| Configuration of RB(s) that are required to be added or modified | | | | Configuration of RB(s) that are required to be deleted | |
| RB identifier 1 | RB identifier 2 | RB identifier 3 | RB identifier 4 | RB identifier 6 | RB identifier 8 |
| RB identifier 1-related configuration | RB identifier 2-related configuration | RB identifier 3-related configuration | RB identifier 4-related configuration | N/A (none) | |

In Table 2, the RB identifier-related configuration (any one of the RB identifier 1-related configuration to the RB identifier 4-related configuration) at least includes the model type identifier and/or the model data size indication information corresponding to the model type identifier. Exemplarily, the RB identifier 1 and the RB identifier 2 are associated with the model 1, the RB identifier 3 and the RB identifier 4 are associated with the model 2, and the RB identifier 6 and the RB identifier 8 are not associated with any model (RB identifier 6 and the RB identifier 8 are used in transmitting common user plane data).

In the above embodiments, the configuration parameters included in the model transmission control information are described. When the model transmission control information includes configuration of at least one RB that is required to be added or modified and is associated with the transmission of the model(s), and/or configuration of at least one RB that is required to be deleted and is associated with the transmission of the model(s), the configuration of the RB(s) associated with the transmission of the model(s) includes at least one of: RB identifier(s); configuration related to an SDAP layer associated with the RB(s); indication information of whether to re-establish an SDAP layer associated with the RB(s); configuration related to a PDCP layer associated with the RB(s); indication information of whether to re-establish a PDCP layer associated with the RB(s); configuration related to a model data adaptation protocol layer associated with the RB(s); or indication information of whether to re-establish a model data adaptation protocol layer associated with the RB(s).

The RB identifier(s) are used to distinguish different RBs. In the configuration form centered on the RB identifier as exemplarily illustrated in Table 2, configuration of RBs is distinguished by the RB identifiers, and different RB identifiers correspond to different RBs. The RB identifier(s) can be identifier(s) of at least one RB that is required to be added or modified and is associated with the transmission of the model(s), and can also be identifier(s) of at least one RB that is required to be deleted and is associated with the transmission of the model(s).

The configuration related to the SDAP layer associated with the RB(s).

The indication information of whether to re-establish the SDAP layer associated with the RB(s). This indication information may indicate to re-establish the SDAP layer associated with the RB(s), and in this case, the configuration corresponding to the SDAP layer needs to be restored to an initial configuration state. This indication information may indicate to not re-establish the SDAP layer associated with the RB(s), and in this case, the configuration corresponding to the SDAP layer is not restored to an initial configuration state.

The configuration related to the PDCP layer associated with the RB(s).

The indication information of whether to re-establish the PDCP layer associated with the RB(s). This indication information may indicate to re-establish the PDCP layer associated with the RB(s), and in this case, the configuration corresponding to the PDCP layer needs to be restored to an initial configuration state. This indication information may indicate to not re-establish the PDCP layer associated with the RB(s), and in this case, the configuration corresponding to the PDCP layer is not restored to an initial configuration state.

The configuration related to the model data adaptation protocol layer associated with the RB(s). The model data adaptation protocol layer is a newly defined protocol layer, which can exist independently or be a part of another protocol layer. FIGS. 8-11 respectively illustrate the implementations of the model data adaptation protocol layer. FIG. 8 is the first diagram of a model data adaptation protocol layer according to an embodiment of the present disclosure. As illustrated in FIG. 8, the model data adaptation protocol layer is located above the SDAP layer. In an embodiment, the RLC protocol layer in FIG. 8 may not appear, i.e., the entire protocol stack has no RLC protocol layer or no RLC protocol layer is configured in the entire protocol stack.

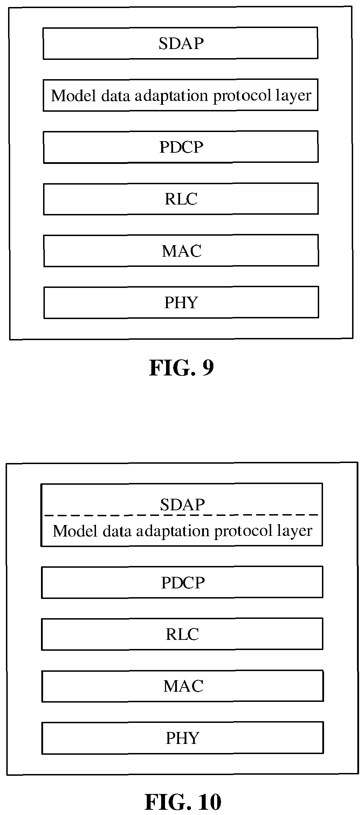

FIG. 9 is the second diagram of a model data adaptation protocol layer according to an embodiment of the present disclosure. As illustrated in FIG. 9, the model data adaptation protocol layer is located between the SDAP layer and the PDCP layer. In an embodiment, the RLC protocol layer in FIG. 9 may not appear, i.e., the entire protocol stack has no an RLC protocol layer or no RLC protocol layer is configured in the entire protocol stack.

FIG. 10 is the third diagram of a model data adaptation protocol layer according to an embodiment of the present disclosure. As illustrated in FIG. 10, functions included in the model data adaptation protocol layer belong to a part of functions included in the SDAP layer, and the functions of the model data adaptation protocol layer are implemented by the SDAP layer. In this implementation, the functions of the model data adaptation protocol layer are implemented by the SDAP layer. In an embodiment, the RLC protocol layer in FIG. 10 may not appear, i.e., the entire protocol stack has no RLC protocol layer or no RLC protocol layer is configured in the entire protocol stack.

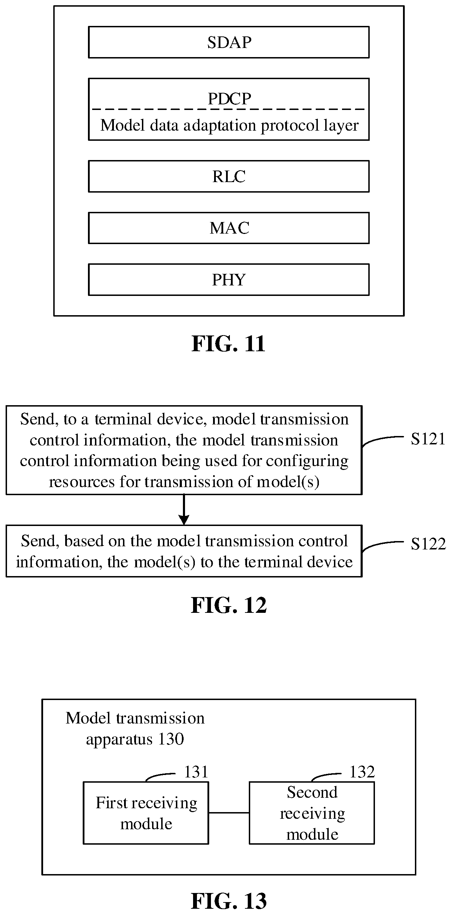

FIG. 11 is the fourth diagram of a model data adaptation protocol layer according to an embodiment of the present disclosure. As illustrated in FIG. 11, functions included in the model data adaptation protocol layer belong to a part of functions included in the PDCP layer, and the functions of the model data adaptation protocol layer are implemented by the PDCP layer. In an embodiment, the RLC protocol layer in FIG. 11 may not appear, i.e., the entire protocol stack has no RLC protocol layer or the entire protocol stack is not configured with an RLC protocol layer.

The indication information of whether to re-establish the model data adaptation protocol layer associated with the RB(s). This indication information is configured only if the model data adaptation protocol layer is separately defined. This indication information may indicate to re-establish the model data adaptation protocol layer associated with the RB(s), and in this case, the configuration corresponding to the model data adaptation protocol layer needs to be restored to an initial configuration state, for example, various timers and counters in the configuration need to be restored to initial values. This indication information may indicate to not re-establish the model data adaptation protocol layer associated with the RB(s), and in this case, the configuration corresponding to the model data adaptation protocol layer is not restored to an initial configuration state.

In an embodiment, if the indication information of whether to re-establish the model data adaptation protocol layer associated with the RB(s) indicates to re-establish the model data adaptation protocol layer associated with the RB(s), the terminal device generates a retransmission indication report of model data, and reports the retransmission indication report of the model data to a model data adaptation protocol layer on a network device side in the form of the model data adaptation protocol layer control data unit, so as to instruct the network device to retransmit the corresponding model data. The details of the retransmission indication report of the model data will be described in detail in the subsequent embodiments. In an embodiment, the indication information of whether to re-establish the model data adaptation protocol layer associated with the RB(s) is configured by an upper layer which may be, for example, the RRC layer.

If the model data adaptation protocol layer is not a separate protocol layer and functions of the model data adaptation protocol layer are implemented by another protocol layer, the retransmission indication report of the model data can be generated through other indication information. For example, when the model data adaptation protocol layer belongs to the SDAP layer, if the indication information of whether to re-establish the SDAP layer associated with the RB(s) indicates to re-establish the SDAP layer associated with the RB(s), the terminal device will generate a retransmission indication report of model data and report the retransmission indication report of the model data to an SDAP layer on the network device side in the form of SDAP layer control data unit, so as to instruct the network device to retransmit the corresponding model data. When the model data adaptation protocol layer belongs to the PDCP layer, if the indication information of whether to re-establish the PDCP layer associated with the RB(s) indicates to re-establish the PDCP layer associated with the RB(s), the terminal device generates a retransmission indication report of model data, and report the retransmission indication report of the model data to a PDCP layer on the network device side in the form of PDCP layer control data unit, so as to instruct the network device to retransmit the corresponding model data.

The configuration related to the model data adaptation protocol layer will be introduced below.

The configuration related to the model data adaptation protocol layer includes at least one of: information of model type identifier(s) associated with the RB(s); model data size indication information associated with the RB(s); information of at least one model data block identifier associated with the RB(s); data size indication information of each of at least one model data block associated with the RB(s); configuration related to internet protocol (IP)-based model data; configuration related to compression and decompression of model data; configuration related to segmentation and concatenation of model data; configuration related to chunking and reassembly of model data; or configuration related to retransmission of model data.

Functions corresponding to parameters included in the configuration related to the model data adaptation protocol layer can be implemented in the model data adaptation protocol layer when the model data adaptation protocol layer is defined separately. If the model data adaptation protocol layer belongs to the SDAP layer, functions corresponding to the parameters included in the configuration related to the model data adaptation protocol layer are implemented by the SDAP layer. If the model data adaptation protocol layer belongs to the PDCP layer, functions corresponding to the parameters included in the configuration related to the model data adaptation protocol layer are implemented by the PDCP layer. The functions corresponding to the parameters included in the configuration related to the model data adaptation protocol layer can be implemented in any order. The parameters included in the configuration related to the model data adaptation protocol layer are described in detail below.

Whether the configuration related to the model data adaptation protocol layer includes information of model type identifier(s) associated with the RB(s) depends on the configuration form of part of configuration parameters in the model transmission control information. If the configuration form is centered on the model type identifier as exemplarily illustrated in Table 1, the configuration related to the model data adaptation protocol layer may not include the information of model type identifier(s) associated with the RB(s). If the configuration form is centered on the RB identifier as exemplarily illustrated in Table 2, the configuration related to the model data adaptation protocol layer may include the information of model type identifier(s) associated with the RB(s), and the information of model type identifier(s) associated with the RB(s) may be an optional parameter or a mandatory parameter. Exemplarily, the model type identifier may be used for routing indication of model data, retransmission indication of model data or convergence indication of model data.

Whether the configuration related to the model data adaptation protocol layer includes model data size indication information associated with the RB(s) depends on the configuration form of part of configuration parameters in the model transmission control information. If the configuration form is centered on the model type identifier as exemplarily illustrated in Table 1, the configuration related to the model data adaptation protocol layer may not include the model data size indication information associated with the RB(s). If the configuration form is centered on the RB identifier as exemplarily illustrated in Table 2, the configuration related to the model data adaptation protocol layer may include the model data size indication information associated with the RB(s), and the model data size indication information associated with the RB(s) may be an optional parameter or a mandatory parameter. Exemplarily, the model data size indication information may be used in the retransmission triggering process of the model data. For example, if a size of a certain model data received by the terminal device is not equal to a size indicated by the model data size indication information, it is considered that transmission of the model fails, which may trigger a further retransmission process of the model.

The information of at least one model data block identifier associated with the RB(s) is mainly used for the block transmission process of the model(s). Some models can be divided into relatively independent model sub-modules for block transmission. The advantage of the block transmission is as follows. The unsuccessful transmission of a sub-module of a model will not lead to retransmission of the whole model, which is beneficial to improve the reliability and effectiveness of the model transmission. When a model is divided into one or more model sub-modules, each model sub-module will be assigned a model data block identifier, and all data contained in the same model sub-module share the same model data block identifier. At the model data receiving end, the data with the same model data block identifier will be reassembled to restore the corresponding model sub-module.

The data size indication information of each of at least one model data block associated with the RB(s) is mainly used in a retransmission triggering process of data of model sub-module(s). For example, if a size of data of a certain model sub-module received by the terminal device is not equal to a size indicated by data size indication information of the model sub-module, it is considered that transmission of the model sub-module fails, which may trigger a further retransmission process of the model sub-module.

The configuration related to IP-based model data is mainly used for adding IP headers to model data, which is convenient for data reassembly at the receiving end. When the model is not divided into sub-modules, IP headers of data packets can be numbered uniformly in sequence, and the data receiving end reassembles the data in order of serial numbers of IP headers. When the model is divided into sub-modules, the IP headers of data packets can be numbered uniformly across sub-modules or the IP headers of data packets can be numbered separately according to sub-modules, and because the sub-module identifier itself can distinguish which sub-module the data belongs to, the data inside the sub-modules can be reassembled in order of serial numbers of the IP headers.

The configuration related to compression and decompression of model data is used for a compression/decompression process of the model data. Exemplarily, the configuration related to compression and decompression of model data may include configuration information of data compression/decompression algorithm(s). Through the compression/decompression process, the transmission efficiency of the model data is further improved.

The configuration related to segmentation and concatenation of model data is used for data segmentation/concatenation. Exemplarily, the configuration related to segmentation and concatenation of model data may include configuration information of data segmentation/concatenation algorithm(s). Through the segmentation/concatenation process, the big data is transmitted in segments to improve accuracy of the transmission. On the other hand, segmenting the big data can also ensure that the underlying transmission restrictions are satisfied and the consistency of transmission strategies among protocol layers is achieved.

The configuration related to chunking and reassembly of model data is used for the chunking and reassembly work of model sub-modules. Each model sub-module is assigned a sub-module identifier, according to the association relationships between the RB(s) and the sub-module identifier(s) configured in the information of the at least one model data block identifier associated with the RB(s), the corresponding model sub-module is transferred to the corresponding RB for transmission, and the receiving end reassembles data according to the model sub-module identifier(s) of the data. On the other hand, when a certain model sub-module needs to be retransmitted, the terminal device can add the identifier of the model sub-module to be retransmitted in the reported retransmission indication report of the model data, so as to realize the data retransmission at a granularity of the model sub-module identifier.

The configuration related to retransmission of model data is mainly used for configuring whether a retransmission mechanism is required to be started, under what conditions a retransmission mechanism is started, and the like. The configuration related to retransmission of model data includes at least one of: indication information of whether to start a retransmission mechanism; indication information of whether to start a retransmission mechanism with a granularity of RB; indication information of whether to start a retransmission mechanism with a granularity of model data block identifier; indication information of whether to allow sending a retransmission indication report of the model data; a maximum number of retransmissions of the model data; or configuration related to a retransmission mechanism trigger event of the model data.

The indication information of whether to start the retransmission mechanism may indicate to start the retransmission mechanism for model retransmission, or may indicate to not start the retransmission mechanism.

The indication information of whether to start the retransmission mechanism with the granularity of RB may indicate to start the retransmission mechanism with the granularity of RB for retransmission at the granularity of RB, or may indicate to not start the retransmission mechanism with the granularity of RB. The retransmission at the granularity of RB refers to retransmission of model data by taking an RB as a unit.

The indication information of whether to start the retransmission mechanism with the granularity of model data block identifier may indicate to start the retransmission mechanism with the granularity of model data block identifier for the retransmission at the granularity of model data block identifier, or may indicate to not start the retransmission mechanism with the granularity of model data block identifier. The retransmission at the granularity of model data block identifier refers to retransmission of model data by taking a model data block identifier as a unit.

The above-mentioned retransmission mechanisms can be a blind retransmission mode at the sending end or a retransmission mode based on feedback from the receiving end. The blind retransmission mode refers to a retransmission mode without feedback from the receiving end; and the retransmission mode based on feedback from the receiving end refers to a retransmission mode in which feedback from the receiving end is required, after one transmission, to determine whether to perform the next retransmission.

The indication information of whether to allow sending the retransmission indication report of the model data may indicate to allow sending the retransmission indication report of the model data or may indicate to not allow sending the retransmission indication report of the model data. This indication information is mainly for the retransmission mode based on feedback from the receiving end. Under certain conditions, the receiving end of data sends the retransmission indication report of the model data to the sending end for assisting the sending end of the data in data retransmission. The receiving end of the data can send the retransmission indication report of the model data to the sending end of the data, only if the indication information of whether to allow sending the retransmission indication report of the model data indicates to allow sending the retransmission indication report of the model data.

In an implementation, the configuration related to retransmission of model data does not include the indication information of whether to allow sending the retransmission indication report of the model data, and by default, the terminal device can send the retransmission indication report of the model data to the network device under the satisfied condition without additional indication by the indication information of whether to allow sending the retransmission indication report of the model data.

The maximum number of retransmissions of the model data is used to specify the maximum number of retransmissions of the model data. This parameter can be configured at a granularity of model (i.e., specifying the number of retransmissions of model as a whole), or may be configured at a granularity of model sub-module (i.e., the maximum number of retransmissions of a single model sub-module), or may be configured at a granularity of model and a granularity of model sub-module at the same time (it is not excluded that one parameter is applicable to the granularity of model and the granularity of model sub-module at the same time or the parameter is defined separately by the granularity of model and by the granularity of model sub-module).

Once the maximum number of retransmissions of the model data is reached and the transmission is still not successful, the behavior of the data receiving end of the terminal device may include the following operation. The low layer notifies the upper layer that the maximum number of retransmissions of the data has been reached. Exemplarily, the low layer may be a model data adaptation protocol layer or a PDCP layer or an SDAP layer; and the upper layer can be an RRC layer.

The configuration related to the retransmission mechanism trigger event of the model data is mainly used for indicating under what conditions retransmission will be triggered. The retransmission mechanism trigger event of the model data includes at least one of: Event 1-failed verification of the model data; Event 2-failed reassembly of the model data; Event 3-failed reassembly of the model data transmitted through any RB; Event 4-failed reassembly of block data of the model data; Event 5-after a model data reassembly timer or a model data discarding timer expires, reassembly or submission of the model data being still not completed; Event 6-after a timer for model data reassembly at a granularity of RB or a model data discarding timer expires, reassembly or submission of the model data associated with corresponding RB(s) being still not completed; Event 7-after a timer for model data reassembly at a granularity of model data block identifier or a model data discarding timer expires, reassembly or submission of corresponding block data of the model data being still not completed; Event 8-a low protocol layer or an upper protocol layer sending first indication information to the model data adaptation protocol layer, and the first indication information indicates that transmission of at least part of the model data is lost or indicates that transmission of at least part of the model data is unsuccessful; or Event 9-second indication information being received from the network device, and the second indication information indicates whether to re-establish the model data adaptation protocol layer associated with the corresponding RB(s).

The Event 1 is related to the security configuration related to the transmission of the model(s). The failed verification of the model data means that the received model data is unreliable and may require retransmission. When verification of the model data fails, retransmission of the model(s) may be triggered.

The Event 2 to the Event 4 are respectively for model data reassembly processes with different granularities (granularity of model, granularity of RB and granularity of model sub-module in sequence). Exemplarily, the failed reassembly may be determined by the fact that the transmission of the model data has stopped but there is still some numbered data missing. The failed reassembly of the model data may trigger retransmission of the model(s). The failed retransmission of the model data transmitted through RB(s) may trigger retransmission of the model data at a granularity of RB. The failed reassembly of block data of the model data may trigger retransmission of the block data of the model(s).

The Event 5 to the Event 7 are for model data reassembly or submission processes with different granularities (granularity of model, granularity of RB and granularity of model sub-module in sequence). For the Event 5 to the Event 7, it is determined whether the event is triggered based on whether a timer expires. For example, the Event 5 means that retransmission may be triggered when reassembly or submission of the model data is still not completed after a discarding timer expires. The difference between the Event 5 and the Event 2 is as follows. The Event 2 means that the retransmission may be triggered only when reassembly of the model data fails, while the Event 5 means that the retransmission may be triggered when reassembly of the model data fails and reassembly or submission of the model data is not completed when the corresponding discarding timer expires. The Event 6 means that the retransmission may be triggered when reassembly of the model data at a granularity of RB fails and reassembly or submission of the model data associated with corresponding RB(s) is not completed when a discarding timer expires. The Event 7 means that the retransmission may be triggered when reassembly of the model data at a granularity of model data block identifier fails and reassembly or submission of corresponding block data of the model data is not completed when a discarding timer expires.

The Event 8 is explained by defining a model data adaptation protocol layer as an example. In this case, the low protocol layer in the Event 8 can be a PDCP layer, an SDAP layer or an RLC layer, and the upper protocol layer can be an SDAP layer. If functions of the model data adaptation protocol layer are merged into functions of the SDAP layer, that is, when the model data adaptation protocol layer belongs to the SDAP layer, the low protocol layer is the PDCP layer, and the upper protocol layer is the SDAP layer or there is no upper protocol layer. If functions of the model data adaptation protocol layer are merged into functions of the PDCP layer, that is, when the model data adaptation protocol layer belongs to the PDCP layer, the low protocol layer is the PDCP layer or the RLC layer, and the upper protocol layer is the SDAP layer.

The Event 9 is explained by defining a model data adaptation protocol layer as an example. In this case, the second indication information in the Event 9 corresponds to the indication information of whether to re-establish the model data adaptation protocol layer associated with the RB(s) described in the previous embodiment. If functions of the model data adaptation protocol layer are merged into the SDAP layer, the second indication information corresponds to the indication information of whether to re-establish the SDAP layer associated with the RB(s) described in the previous embodiment. If functions of the model data adaptation protocol layer are merged into the PDCP layer, the second indication information corresponds to the indication information of whether to re-establish the PDCP layer associated with the RB(s) described in the previous embodiment.

In the above embodiments, the retransmission mechanism trigger events of the model data are introduced. When the retransmission mechanism trigger event of the model data is triggered, the retransmission of the model data will be triggered. In some embodiments, the configuration related to the retransmission mechanism trigger event of the model data includes event identifier information and/or timer configuration information related to the retransmission. In an embodiment, the timer configuration information related to the retransmission includes the timer defined by the Event 5 to the Event 7. In another implementation, if the configuration related to the retransmission mechanism trigger event of the model data does not include the timer configuration information related to the retransmission, values of these timers related to the retransmission can be specified by a default value selection mode.

When a preset condition is satisfied, the terminal device can send the retransmission indication report of the model data to the network device, and the retransmission indication report of the model data is used to instruct the network device to retransmit the corresponding model data.

The preset condition includes at least one of: the indication information of whether to re-establish the model data adaptation protocol layer associated with the RB(s) indicating to re-establish the model data adaptation protocol layer associated with the RB(s); the model data adaptation protocol layer belonging to the SDAP layer, and the indication information of whether to re-establish the SDAP layer associated with the RB(s) indicating to re-establish the SDAP layer associated with the RB(s); the model data adaptation protocol layer belonging to the PDCP layer, and the indication information of whether to re-establish the PDCP layer associated with the RB(s) indicating to re-establish the PDCP layer associated with the RB(s); or the retransmission mechanism trigger event of the model data being triggered. The trigger event includes the Events 1 to 9 in the above embodiments.

Before sending the retransmission indication report of the model data, the terminal device generates the retransmission indication report of the model data at first. The retransmission indication report of the model data includes at least one of: model type identifier(s) for which the retransmission of the model data is required to be performed; at least one RB identifier for which the retransmission of the model data is required to be performed; or at least one model data block identifier for which the retransmission of the model data is required to be performed.

The network device can realize retransmission of the model data at different granularities according to contents indicated by the retransmission indication report of the model data. For example, based on model type identifier(s) for which the retransmission of the model data is required to be performed, retransmission at a granularity of model is performed; based on at least one RB identifier for which the retransmission of the model data is required to be performed, retransmission at a granularity of RB is performed; and based on at least one model data block identifier for which the retransmission of the model data is required to be performed, retransmission at a granularity of model data block is performed. In an embodiment, the network device can also specify the maximum numbers of retransmissions of model data at different granularities based on the maximum number of retransmissions of model data in the configuration related to retransmission of model data, and perform retransmission based on the maximum numbers of retransmissions.

The retransmission indication report of the model data can also be associated with a transmission prohibition timer for controlling a frequency of triggering the retransmission indication report of the model data. Whenever one retransmission indication report of the model data is triggered, the transmission prohibition timer is started, and the terminal device cannot initiate the next retransmission indication report of the model data before the transmission prohibition timer expires.

Configuration of the transmission prohibition timer corresponding to the retransmission indication report of the model data can be configured by dedicated signaling; can be configured by a system broadcast message, or can be default configuration of the transmission prohibition timer.

In the above embodiments, the configuration of the RB(s) associated with the transmission of the model(s) has been described and the security configuration related to the transmission of the model(s) will be described below.

The security configuration related to the transmission of the model(s) is mainly used to improve the security of the transmission of the model data. During the transmission of the model(s), encryption and/or other operations can be performed on the model(s) or sub-modules of the model(s). The security configuration related to the transmission of the model(s) includes at least one of: configuration of a security algorithm of the transmission of the model(s); indication information of a type of a base key that is used; configuration of a base key; a verification sequence of model data; or a verification algorithm of model data.

The configuration of the security algorithm of the transmission of the model(s) includes an integrity protection algorithm and a data encryption and decryption algorithm, for integrity protection and encryption and decryption of the PDCP layer or the model data adaptation protocol layer. In a process of the transmission of the model(s), the model(s) can be encrypted and decrypted through the configuration of the security algorithm of the transmission of the model(s), so as to improve the security of the transmission of the model(s).

The indication information of the type of the base key that is used is used to indicate which base key is. The base key is a basic key, and various keys can be generated on the basis of the base key. The indication information of the type of the base key that is used, for example, indicates that the base key is a Non-Access Stratum (NAS for short) key or an Access Stratum (AS for short) key. Alternatively, the indication information of the type of the base key that is used, for example, indicates that the base key is a key corresponding to a Primary Cell (PCell for short) or a key corresponding to a Primary Secondary Cell (PSCell for short), or the like.

The configuration of the base key directly provides the base key or provides input parameters that generate the base key. According to the configuration of the base key, the base key can be obtained directly.

The verification sequence of the model data and the verification algorithm of the model data are used for data verification at the receiving end of model data. The configuration granularity can be granularity of model, granularity of RB or granularity of model sub-module.

With regard to granularity of the security configuration related to the transmission of the model(s), it can be that all the model(s) share a set of security configuration, and in this case, the security configuration related to the transmission of the model(s) is a security configuration shared by the model(s). It can also be that each model is configured with an independent set of security configuration, and in this case, the security configuration related to the transmission of the model(s) includes security configuration(s) respectively corresponding to the model(s). The security configuration related to the transmission of the model(s) is mainly used to improve the security of the transmission of the model(s).

When model(s) configured on the network device side is updated, the network device can send a model update message to the terminal device, the model update message indicates a predefined part that is required to be updated in the model(s). After obtaining the model update message, the terminal device can know the predefined part that is required to be updated in the model(s).

The predefined part in the model(s) includes at least one of: a set of types of input data of the model(s); a set of types of output data of the model(s); structure requirements of the model(s); or performance requirements of the model(s). When the predefined part in the model(s) includes the set of types of input data of the model(s), it means that the set of types of input data of the model(s) needs to be updated. When the predefined part in the model(s) includes the set of types of output data of the model(s), it means that the set of types of output data of the model(s) needs to be updated. When the predefined part in the model(s) includes the structure requirements of the model(s), it means that the structure data of the model(s) needs to be updated. When the predefined part in the model(s) includes performance requirements of the model(s), it means that the performance requirements of the model(s) need to be updated.

In an implementation, after receiving the model update message, the terminal device can choose to reply with a receipt message or a reject message. For example, when the terminal device determines that the importance of the predefined part to be updated is not high, the terminal device may reject the message and do not update the predefined part. After the terminal device replies with the receipt message, the network device configures new data reception configuration information for the terminal device (in this case, the terminal device receives the updated model data through the user plane process of the RB) or sends data about the updated part to the terminal device directly through the RRC message. The terminal device can update predefined part in the model(s) that is required to be updated based on the data reception configuration information.

In an implementation, when the model(s) on the network device side is updated, the network device sends no model update message to the terminal device. That is, the network device directly sends data about the updated part to the terminal device through the RRC message, without informing the terminal device in advance which predefined part of the model(s) has been updated. The terminal device receives the RRC message from the network device and updates, based on the RRC message, the predefined part that is required to be updated in the model(s).

In S72, the terminal device sends a feedback message to the network device.

The feedback message indicates that the model transmission control information is successfully received by the terminal device. After successfully receiving the model transmission control information, the terminal device can choose to send the feedback message to the network device or to not send the feedback message to the network device. That is, S72 is an optional operation, rather than a mandatory operation.

In S73, the network device sends, based on the model transmission control information, the model(s) to the terminal device.

After the terminal device receives the model transmission control information, since the model transmission control information is used to configure the resources for the transmission of the model(s) for the terminal device, for example, the model transmission control information may include model data size indication information, when the transmission of the model(s) is performed later, whether the transmission of the model(s) is successful is verified based on the model data size indication information. The model transmission control information may further include configuration of RB(s) associated with the transmission of the model(s) which may, for example, include the configuration related to the model data adaptation protocol layer, the configuration related to retransmission of model data, when to trigger retransmission of model data, how to perform retransmission of model data (e.g., performing retransmission of the model(s) at a granularity of model, at a granularity of RB or at a granularity of model sub-module), the security configuration related to the transmission of the model(s) to ensure the safety of the transmission of the model(s).

After the terminal device obtains the model transmission control information, the network device sends the model(s) to the terminal device based on the model transmission control information. Since the model transmission control information configures resources related to the transmission of the model(s) for the terminal device, the reliability of the transmission of the model(s) can be improved based on the resources related to the transmission of the model(s).

Compared with transmission based on the SRB process, the solutions of the embodiments of the present disclosure do not need to perform transmission in segments through a large number of RRC signaling, thereby avoiding the case that transmission of other signaling is blocked due to a large number of RRC signaling occupied during model transmission. Compared with transmission based on the DRB process, the solutions of the embodiments of the present disclosure introduce a new mechanism of model data transmission or model data retransmission, which will not cause the problem that the whole model data is unavailable due to the loss of a certain part of the model data, and can take into account the effectiveness and reliability of model transmission.

FIG. 12 is a flowchart of a model transmission method according to an embodiment of the present disclosure, and the method is applied to a network device. As illustrated in FIG. 12, the method includes the following operations.

In S121, model transmission control information is sent to a terminal device, the model transmission control information being used for configuring resources for transmission of model(s).

In S122, based on the model transmission control information, the model(s) is sent to the terminal device.

The solution illustrated in FIG. 12 is a solution performed on the network device side. For the detailed implementations, the reference may be made to the above-mentioned embodiments and will not be described here.

In the model transmission method and the model transmission apparatus according to the embodiments of the present disclosure, firstly, a terminal device receives model transmission control information from a network device; and then receives, based on the model transmission control information, the model(s) from the network device. By obtaining the model transmission control information, resource allocation of model transmission is obtained, and the model(s) are obtained based on the resource allocation of the model transmission, so as to realize the effective and reliable transmission of model data.

FIG. 13 is the first diagram of a structure of a model transmission apparatus according to an embodiment of the present disclosure. As illustrated in FIG. 13, the model transmission apparatus 130 includes a first receiving module 131 and a second receiving module 132.

The first receiving module 131 is configured to receive, from a network device, model transmission control information for configuring resources for transmission of model(s).

The second receiving module 132 is configured to receive, based on the model transmission control information, the model(s) from the network device.

In a possible implementation, the model transmission control information includes at least one of the following: model type identifier(s); model data size indication information; configuration of at least one radio bearer RB that is required to be added or modified and is associated with the transmission of the model(s); configuration of at least one RB that is required to be deleted and is associated with the transmission of the model(s); or security configuration related to the transmission of the model(s).

In a possible implementation, at least one of the following applies: the model data size indication information is model data size indication information corresponding to the model type identifier(s); the configuration of the at least one RB that is required to be added or modified and is associated with the transmission of the model(s) is configuration of RB(s), that are required to be added or modified and are associated with the transmission of the model(s), corresponding to the model type identifier(s); or the configuration of the RB that is required to be deleted and is associated with the transmission of the model(s) is configuration of RB(s), that are required to be deleted and are associated with the transmission of the model(s), corresponding to the model type identifier(s).

In a possible implementation, the configuration of the at least one RB that is required to be added or modified and is associated with the transmission of the model(s) is configuration of RB(s), that are required to be added or modified and are associated with the transmission of the model(s), corresponding to RB identifier(s); and/or the configuration of the at least one RB that is required to be deleted and is associated with the transmission of the model(s) is configuration of RB(s), that are required to be deleted and are associated with the transmission of the model(s), corresponding to RB identifier(s).

In a possible implementation, the configuration of the RB(s) associated with the transmission of the model(s) includes at least one of: RB identifier(s); configuration related to a service data adaptation protocol SDAP layer associated with the RB(s); indication information of whether to re-establish an SDAP layer associated with the RB(s); configuration related to a packet data convergence protocol PDCP layer associated with the RB(s); indication information of whether to re-establish a PDCP layer associated with the RB(s); configuration related to a model data adaptation protocol layer associated with the RB(s); or indication information of whether to re-establish a model data adaptation protocol layer associated with the RB(s).

In a possible implementation, at least one of the following applies: the model data adaptation protocol layer is located above the SDAP layer; the model data adaptation protocol layer is located between the SDAP layer and the PDCP layer; the model data adaptation protocol layer belongs to the SDAP layer; or the model data adaptation protocol layer belongs to the PDCP layer.

In a possible implementation, the configuration related to the model data adaptation protocol layer includes at least one of: information of model type identifier(s) associated with the RB(s); model data size indication information associated with the RB(s); information of at least one model data block identifier associated with the RB(s); data size indication information of each of at least one model data block associated with the RB(s); configuration related to internet protocol IP-based model data; configuration related to compression and decompression of model data; configuration related to segmentation and concatenation of model data; configuration related to chunking and reassembly of model data; or configuration related to retransmission of model data.

In a possible implementation, the configuration related to the retransmission of the model data includes at least one of: indication information of whether to start a retransmission mechanism; indication information of whether to start a retransmission mechanism with a granularity of RB; indication information of whether to start a retransmission mechanism with a granularity of model data block identifier; indication information of whether to allow sending a retransmission indication report of the model data; a maximum number of retransmissions of the model data; or configuration related to a retransmission mechanism trigger event of the model data.

In a possible implementation, the retransmission mechanism trigger event of the model data includes at least one of the following events: failed verification of the model data; failed reassembly of the model data; failed reassembly of the model data transmitted through any RB; failed reassembly of block data of the model data; after a model data reassembly timer or a model data discarding timer expires, reassembly or submission of the model data being still not completed; after a timer for model data reassembly at a granularity of RB or a model data discarding timer expires, reassembly or submission of the model data associated with corresponding RB(s) being still not completed; after a timer for model data reassembly at a granularity of model data block identifier or a model data discarding timer expires, reassembly or submission of corresponding block data of the model data being still not completed; a low protocol layer or an upper protocol layer sending first indication information to the model data adaptation protocol layer, the first indication information indicating that transmission of at least part of the model data is lost or indicates that transmission of at least part of the model data is unsuccessful; or second indication information being received from the network device, the second indication information indicating whether to re-establish the model data adaptation protocol layer associated with the corresponding RB(s).

In a possible implementation, the low protocol layer is the SDAP layer, the PDCP layer or a radio link control RLC layer; and the upper protocol layer is the SDAP layer.

In a possible implementation, the model data adaptation protocol layer belongs to the SDAP layer, the low protocol layer is the PDCP layer, and the upper protocol layer is the SDAP layer or the upper protocol layer does not exist.

Alternatively, the model data adaptation protocol layer belongs to the PDCP layer, the low protocol layer is the PDCP layer or the RLC layer, and the upper protocol layer is the SDAP layer.

In a possible implementation, the configuration related to the retransmission mechanism trigger event of the model data includes event identifier information and/or timer configuration information related to the retransmission.

In a possible implementation, the model transmission apparatus further includes a sending module, configured to: when a preset condition is satisfied, send the retransmission indication report of the model data to the network device. The retransmission indication report of the model data instructs the network device to perform retransmission of the corresponding model data.

In a possible implementation, the preset conditions include at least one of: the indication information of whether to re-establish the model data adaptation protocol layer associated with the RB(s) indicating to re-establish the model data adaptation protocol layer associated with the RB(s); the model data adaptation protocol layer belonging to the SDAP layer, and the indication information of whether to re-establish the SDAP layer associated with the RB(s) indicating to re-establish the SDAP layer associated with the RB(s); the model data adaptation protocol layer belonging to the PDCP layer, and the indication information of whether to re-establish the PDCP layer associated with the RB(s) indicating to re-establish the PDCP layer associated with the RB(s); or the retransmission mechanism trigger event of the model data being triggered.

In a possible implementation, the retransmission indication report of the model data includes at least one of: model type identifier(s) for which the retransmission of the model data is required to be performed; at least one RB identifier for which the retransmission of the model data is required to be performed; or at least one model data block identifier for which the retransmission of the model data is required to be performed.

In a possible implementation, the model transmission apparatus further includes a transmission prohibition timer. The transmission prohibition timer is configured to control a frequency of triggering the retransmission indication report of the model data.

In a possible implementation, configuration of the transmission prohibition timer includes at least one of: configuration of the transmission prohibition timer that is configured by dedicated signaling; default configuration of the transmission prohibition timer; or configuration of the transmission prohibition timer that is configured by a system broadcast message.

In a possible implementation, the security configuration related to the transmission of the model(s) includes at least one of: configuration of a security algorithm of the transmission of the model(s); indication information of a type of a base key that is used; configuration of a base key; a verification sequence of model data; or a verification algorithm of model data.

In a possible implementation, the security configuration related to the transmission of the model(s) is a security configuration shared by the model(s), or the security configuration related to the transmission of the model(s) includes security configuration(s) respectively corresponding to the model(s).

In a possible implementation, the first receiving module 131 is further configured to receive a model update message from the network device. The model update message indicates a predefined part that is required to be updated in the model(s).

In a possible implementation, the predefined part in the model(s) includes at least one of: a set of types of input data of the model(s); a set of types of output data of the model(s); structure requirements of the model(s); or performance requirements of the model(s).

In a possible implementation, the second receiving module 132 is further configured to receive data reception configuration information from the network device; and based on the data reception configuration information, update the predefined part that is required to be updated in the model(s).

In a possible implementation, the second receiving module 132 is further configured to receive a radio resource control RRC message from the network device, where the RRC message includes a predefined part that is required to be updated in the model(s); and based on the RRC message, update the predefined part that is required to be updated in the model(s).

In a possible implementation, the first receiving module 131 is configured to receive a control message from the network device; and based on the control message, obtain the model transmission control information.

In a possible implementation, the model transmission apparatus further includes a sending module, configured to: before receiving, based on the model transmission control information, the model(s) from the network device, send a feedback message to the network device. The feedback message indicates that the model transmission control information is successfully received.

The model transmission apparatus according to the embodiments of the present disclosure can perform the technical solutions illustrated in the method embodiments, and realization principle and beneficial effect of the technical solution are similar to that described in method embodiments, which will not be repeated here.

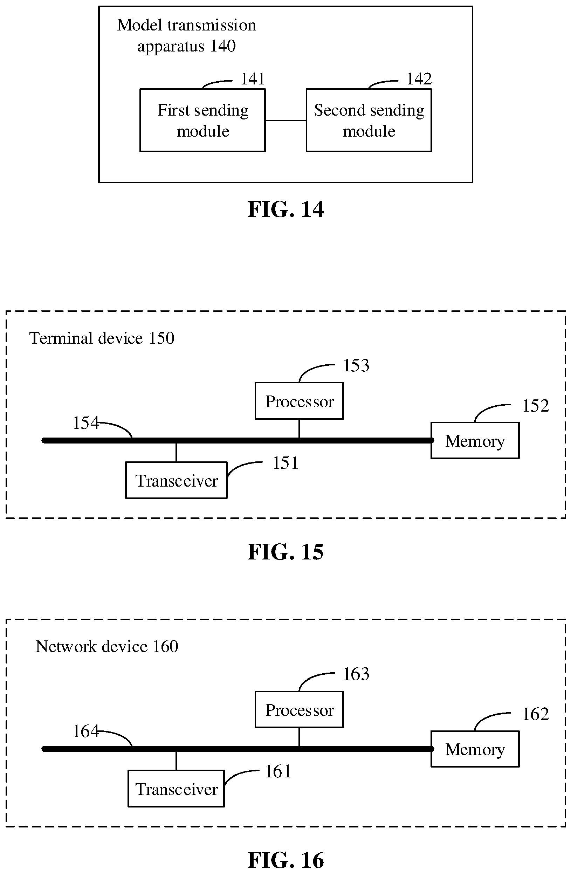

FIG. 14 is the second diagram of a structure of a model transmission apparatus according to an embodiment of the present disclosure. As illustrated in FIG. 14, a model transmission apparatus 140 includes a first sending module 141 and a second sending module 142.

The first sending module 141 is configured to send, to a terminal device, model transmission control information for configuring resources for transmission of model(s).

The second sending module 142 is configured to send, based on the model transmission control information, the model(s) to the terminal device.

In a possible implementation, the model transmission control information includes at least one of: model type identifier(s); model data size indication information; configuration of at least one radio bearer RB that is required to be added or modified and is associated with the transmission of the model(s); configuration of at least one RB that is required to be deleted and is associated with the transmission of the model(s); or security configuration related to the transmission of the model(s).

In a possible implementation, at least one of the following applies: the model data size indication information is model data size indication information corresponding to the model type identifier(s); the configuration of the at least one RB that is required to be added or modified and is associated with the transmission of the model(s) is configuration of RB(s), that are required to be added or modified and are associated with the transmission of the model(s), corresponding to the model type identifier(s); or the configuration of the RB that is required to be deleted and is associated with the transmission of the model(s) is configuration of RB(s), that are required to be deleted and are associated with the transmission of the model(s), corresponding to the model type identifier(s).

In a possible implementation, the configuration of the at least one RB that is required to be added or modified and is associated with the transmission of the model(s) is configuration of RB(s), that are required to be added or modified and are associated with the transmission of the model(s), corresponding to RB identifier(s); and/or the configuration of the at least one RB that is required to be deleted and is associated with the transmission of the model(s) is configuration of RB(s), that are required to be deleted and are associated with the transmission of the model(s), corresponding to RB identifier(s).

In a possible implementation, the configuration of the RB(s) associated with the transmission of the model(s) includes at least one of: RB identifier(s); configuration related to a service data adaptation protocol SDAP layer associated with the RB(s); indication information of whether to re-establish an SDAP layer associated with the RB(s); configuration related to a packet data convergence protocol PDCP layer associated with the RB(s); indication information of whether to re-establish a PDCP layer associated with the RB(s); configuration related to a model data adaptation protocol layer associated with the RB(s); or indication information of whether to re-establish a model data adaptation protocol layer associated with the RB(s).

In a possible implementation, at least one of the following applies: the model data adaptation protocol layer is located above the SDAP layer; the model data adaptation protocol layer is located between the SDAP layer and the PDCP layer; the model data adaptation protocol layer belongs to the SDAP layer; or the model data adaptation protocol layer belongs to the PDCP layer.

In a possible implementation, the configuration related to the model data adaptation protocol layer includes at least one of: information of model type identifier(s) associated with the RB(s); model data size indication information associated with the RB(s); information of at least one model data block identifier associated with the RB(s); data size indication information of each of at least one model data block associated with the RB(s); configuration related to internet protocol IP-based model data; configuration related to compression and decompression of model data; configuration related to segmentation and concatenation of model data; configuration related to chunking and reassembly of model data; or configuration related to retransmission of model data.

In a possible implementation, the configuration related to the retransmission of the model data includes at least one of: indication information of whether to start a retransmission mechanism; indication information of whether to start a retransmission mechanism with a granularity of RB; indication information of whether to start a retransmission mechanism with a granularity of model data block identifier; indication information of whether to allow sending a retransmission indication report of the model data; a maximum number of retransmissions of the model data; or configuration related to a retransmission mechanism trigger event of the model data.

In a possible implementation, the retransmission mechanism trigger event of the model data includes at least one of the following events: failed verification of the model data by the terminal device; failed reassembly of the model data by the terminal device; failed reassembly of the model data transmitted through any RB, by the terminal device; failed reassembly of block data of the model data by the terminal device; after a model data reassembly timer or a model data discarding timer expires, reassembly or submission of the model data being still not completed by the terminal device; after a timer for model data reassembly at a granularity of RB or a model data discarding timer expires, reassembly or submission of the model data associated with corresponding RB(s) being still not completed by the terminal device; after a timer for model data reassembly at a granularity of model data block identifier or a model data discarding timer expires, reassembly or submission of corresponding block data of the model data being still not completed by the terminal device; a low protocol layer or an upper protocol layer of the terminal device sending first indication information to the model data adaptation protocol layer, where the first indication information indicates that transmission of at least part of the model data is lost or indicates that transmission of at least part of the model data is unsuccessful; or second indication information being received by the terminal device from the network device, where the second indication information indicates whether to re-establish the model data adaptation protocol layer associated with the corresponding RB(s).

In a possible implementation, the low protocol layer is the SDAP layer, the PDCP layer or a radio link control RLC layer; and the upper protocol layer is the SDAP layer.

In a possible implementation, the model data adaptation protocol layer belongs to the SDAP layer, the low protocol layer is the PDCP layer, and the upper protocol layer is the SDAP layer or the upper protocol layer does not exist.

Alternatively, the model data adaptation protocol layer belongs to the PDCP layer, the low protocol layer is the PDCP layer or the RLC layer, and the upper protocol layer is the SDAP layer.

In a possible implementation, the configuration related to the retransmission mechanism trigger event of the model data includes event identifier information and/or timer configuration information related to the retransmission.

In a possible implementation, the model transmission apparatus further includes a receiving module, configured to: when a preset condition is satisfied, receive the retransmission indication report of the model data from the terminal device. The retransmission indication report of the model data indicates retransmission of the corresponding model data.

In a possible implementation, the preset condition includes at least one of: the indication information of whether to re-establish the model data adaptation protocol layer associated with the RB(s) indicating to re-establish the model data adaptation protocol layer associated with the RB(s); the model data adaptation protocol layer belonging to the SDAP layer, and the indication information of whether to re-establish the SDAP layer associated with the RB(s) indicating to re-establish the SDAP layer associated with the RB(s); the model data adaptation protocol layer belonging to the PDCP layer, and the indication information of whether to re-establish the PDCP layer associated with the RB(s) indicating to re-establish the PDCP layer associated with the RB(s); or the retransmission mechanism trigger event of the model data being triggered.

In a possible implementation, the retransmission indication report of the model data includes at least one of: model type identifier(s) for which the retransmission of the model data is required to be performed; at least one RB identifier for which the retransmission of the model data is required to be performed; or at least one model data block identifier for which the retransmission of the model data is required to be performed.

In a possible implementation, a transmission prohibition timer is further included. The transmission prohibition timer is configured to control a frequency of triggering the retransmission indication report of the model data.

In a possible implementation, configuration of the transmission prohibition timer includes at least one of: configuration of the transmission prohibition timer that is configured by dedicated signaling; default configuration of the transmission prohibition timer; or configuration of the transmission prohibition timer that is configured by a system broadcast message.

In a possible implementation, the security configuration related to the transmission of the model(s) includes at least one of: configuration of a security algorithm of the transmission of the model(s); indication information of a type of a base key that is used; configuration of a base key; a verification sequence of model data; or a verification algorithm of model data.

In a possible implementation, the security configuration related to the transmission of the model(s) is a security configuration shared by the model(s), or the security configuration related to the transmission of the model(s) includes security configuration(s) respectively corresponding to the model(s).

In a possible implementation, the first sending module 141 is further configured to send a model update message to the terminal device. The model update message indicates, to the terminal device, a predefined part that is required to be updated in the model(s).

In a possible implementation, the predefined part in the model(s) includes at least one of: a set of types of input data of the model(s); a set of types of output data of the model(s); structure requirements of the model(s); or performance requirements of the model(s).

In a possible implementation, the second sending module 142 is further configured to send data reception configuration information to the terminal device. The data reception configuration information instructs the terminal device to update the predefined part that is required to be updated in the model(s).

In a possible implementation, the second sending module 142 is further configured to send a radio resource control RRC message to the terminal device. The RRC message includes a predefined part that is required to be updated in the model(s), and the RRC message instructs the terminal device to update the predefined part that is required to be updated in the model(s).

In a possible implementation, the first sending module 141 is configured to send a control message to the terminal device. The control message includes the model transmission control information.

In a possible implementation, the model transmission apparatus further includes a receiving module, configured to: before sending, based on the model transmission control information, the model(s) to the terminal device, receive a feedback message from the terminal device. The feedback message indicates that the model transmission control information is successfully received by the terminal device.

The model transmission apparatus according to the embodiments of the present disclosure can perform the technical solutions illustrated in the method embodiments, and realization principle and beneficial effect of the technical solution are similar to that described in method embodiments, which will not be repeated here.

FIG. 15 is a diagram of a structure of a terminal device according to an embodiment of the present disclosure. Referring to FIG. 15, a terminal device 150 may include a transceiver 151, a memory 152 and a processor 153. The transceiver 151 may include at least one of a transmitter or a receiver. The transmitter may also be referred to as a sender, an emitter, a transmit port or a transmit interface or the like; and the receiver may also be referred to as a receiver, a receptor, a receive port or a receive interface or the like. Exemplarily, the transceiver 151, the memory 152 and the processor 153 are interconnected via a bus 154.

The memory 152 is for storing program instructions.

The processor 153 is configured to execute the program instructions stored in the memory to cause the terminal device 150 to perform any model transmission method illustrated above.

The receiver of the transceiver 151 is configured to perform receiving functions of the terminal device in the model transmission method.

FIG. 16 is a diagram of a structure of a network device according to an embodiment of the present disclosure. Referring to FIG. 16, a network device 160 may include a transceiver 161, a memory 162 and a processor 163. The transceiver 161 may include at least one of a transmitter or a receiver. The transmitter may also be referred to as a sender, an emitter, a transmit port or a transmit interface or the like; and the receiver may also be referred to as a receiver, a receptor, a receive port or a receive interface or the like. Exemplarily, the transceiver 161, the memory 162 and the processor 163 are interconnected via a bus 164.

The memory 162 is for storing program instructions.

The processor 163 is configured to execute the program instructions stored in the memory to cause the terminal device 160 to perform any model transmission method illustrated above.

The receiver of the transceiver 161 is configured to perform receiving functions of the network device in the model transmission method.

An embodiment of the present disclosure provides a computer readable storage medium having stored thereon computer executable instructions that, when executed by a processor, implement the model transmission method.

An embodiment of the present disclosure provides a computer readable storage medium having stored thereon computer executable instructions that, when executed by a processor, implement the model transmission method.

An embodiment of the present disclosure can further provide a computer program product, which can be executed by a processor. When the computer program product is executed, the model transmission method performed by the terminal device or the network device as described above can be implemented.

The communication device, the computer readable storage medium and the computer program product according to the embodiments of the present disclosure can perform the model transmission methods performed by the terminal device and the network device. For the specific implementation process and beneficial effects of the model transmission methods, the above description can be referred to and will not be described here.

In the several embodiments provided by the present disclosure, it should be understood that the disclosed system, apparatus and method may be implemented in other ways. For example, the apparatus embodiments described above are only illustrative. For example, the division of the units is only the division of logical functions, and there may be other divisions in actual implementation. For example, multiple units or components may be combined or integrated into another system, or some features may be ignored or not implemented. In addition, the displayed or discussed mutual coupling or direct coupling or communication connection may be indirect coupling or communication connection through some interfaces, apparatuses or units, and may be in electrical, mechanical or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the present embodiments. In addition, the functional units in each embodiment of the present disclosure may be integrated into one processing unit, or each unit may exist separately and physically, or two or more units may be integrated into one unit. The integrated unit can be realized either in the form of hardware or in the form of software functional unit.

Those of ordinary skill in the art can understand that all or part of the operations in the above method embodiments can be implemented by programs instructing relevant hardware. The foregoing computer programs can be stored in a computer readable storage medium. The computer programs, when being executed by a processor, execute the operations including the foregoing method embodiments. The foregoing storage medium includes various medium that can store program codes, such as read-only memories (ROMs), random access memories (RAMs), magnetic disks or optical disks, and the like.

Finally, it should be noted that the various embodiments are only used to illustrate the technical solutions of the present disclosure, but are not intended to limit the technical solutions of the present disclosure. Although the present disclosure has been described in detail with reference to the various embodiments, it should be understood by those of ordinary skill in the art that the technical solutions described in the various embodiments can still be modified or some or all of the technical features thereof can be equivalently substituted. These modifications or substitutions do not depart the essence of the corresponding technical solutions from the scope of the technical solutions of the various embodiments of the present disclosure.

## Claims

1. A model transmission method, applied to a terminal device and comprising:
receiving, from a network device, model transmission control information for configuring resources for transmission of model(s); and
receiving, based on the model transmission control information, the model(s) from the network device.

2. The model transmission method of claim 1, wherein the model transmission control information comprises at least one of:
model type identifier(s);
model data size indication information;
configuration of at least one radio bearer RB that is required to be added or modified and is associated with the transmission of the model(s);
configuration of at least one RB that is required to be deleted and is associated with the transmission of the model(s); or
security configuration related to the transmission of the model(s).

3. The model transmission method of claim 2, wherein at least one of the following applies:
the model data size indication information is model data size indication information corresponding to the model type identifier(s);
the configuration of the at least one RB that is required to be added or modified and is associated with the transmission of the model(s) is configuration of RB(s), that are required to be added or modified and are associated with the transmission of the model(s), corresponding to the model type identifier(s); or
the configuration of the RB that is required to be deleted and is associated with the transmission of the model(s) is configuration of RB(s), that are required to be deleted and are associated with the transmission of the model(s), corresponding to the model type identifier(s).

4. The model transmission method of claim 2, wherein
the configuration of the at least one RB that is required to be added or modified and is associated with the transmission of the model(s) is configuration of RB(s), that are required to be added or modified and are associated with the transmission of the model(s), corresponding to RB identifier(s); and/or
the configuration of the at least one RB that is required to be deleted and is associated with the transmission of the model(s) is configuration of RB(s), that are required to be deleted and are associated with the transmission of the model(s), corresponding to RB identifier(s).

5. The model transmission method of any one of claims 2 to 4, wherein the configuration of the RB(s) associated with the transmission of the model(s) comprises at least one of:
RB identifier(s);
configuration related to a service data adaptation protocol SDAP layer associated with the RB(s);
indication information of whether to re-establish an SDAP layer associated with the RB(s);
configuration related to a packet data convergence protocol PDCP layer associated with the RB(s);
indication information of whether to re-establish a PDCP layer associated with the RB(s);
configuration related to a model data adaptation protocol layer associated with the RB(s); or
indication information of whether to re-establish a model data adaptation protocol layer associated with the RB(s).

6. The model transmission method of claim 5, wherein at least one of the following applies:
the model data adaptation protocol layer is located above the SDAP layer;
the model data adaptation protocol layer is located between the SDAP layer and the PDCP layer;
the model data adaptation protocol layer belongs to the SDAP layer; or
the model data adaptation protocol layer belongs to the PDCP layer.

7. The model transmission method of claim 5 or 6, wherein the configuration related to the model data adaptation protocol layer comprises at least one of:
information of model type identifier(s) associated with the RB(s);
model data size indication information associated with the RB(s);
information of at least one model data block identifier associated with the RB(s);
data size indication information of each of at least one model data block associated with the RB(s);
configuration related to internet protocol IP-based model data;
configuration related to compression and decompression of model data;
configuration related to segmentation and concatenation of model data;
configuration related to chunking and reassembly of model data; or
configuration related to retransmission of model data.

8. The model transmission method of claim 7, wherein the configuration related to the retransmission of the model data comprises at least one of:
indication information of whether to start a retransmission mechanism;
indication information of whether to start a retransmission mechanism with a granularity of RB;
indication information of whether to start a retransmission mechanism with a granularity of model data block identifier;
indication information of whether to allow sending a retransmission indication report of the model data;
a maximum number of retransmissions of the model data; or
configuration related to a retransmission mechanism trigger event of the model data.

9. The model transmission method of claim 8, wherein the retransmission mechanism trigger event of the model data comprises at least one of the following events:
failed verification of the model data;
failed reassembly of the model data;
failed reassembly of the model data transmitted through any RB;
failed reassembly of block data of the model data;
after a model data reassembly timer or a model data discarding timer expires, reassembly or submission of the model data being still not completed;
after a timer for model data reassembly at a granularity of RB or a model data discarding timer expires, reassembly or submission of the model data associated with corresponding RB(s) being still not completed;
after a timer for model data reassembly at a granularity of model data block identifier or a model data discarding timer expires, reassembly or submission of corresponding block data of the model data being still not completed;
a low protocol layer or an upper protocol layer sending first indication information to the model data adaptation protocol layer, wherein the first indication information indicates that transmission of at least part of the model data is lost or indicates that transmission of at least part of the model data is unsuccessful; or
second indication information being received from the network device, wherein the second indication information indicates whether to re-establish the model data adaptation protocol layer associated with the corresponding RB(s).

10. The model transmission method of claim 9, wherein the low protocol layer is the SDAP layer, the PDCP layer or a radio link control RLC layer; and the upper protocol layer is the SDAP layer.

11. The model transmission method of claim 10, wherein
the model data adaptation protocol layer belongs to the SDAP layer, the low protocol layer is the PDCP layer, and the upper protocol layer is the SDAP layer or the upper protocol layer does not exist; or
the model data adaptation protocol layer belongs to the PDCP layer, the low protocol layer is the PDCP layer or the RLC layer, and the upper protocol layer is the SDAP layer.

12. The model transmission method of any one of claims 8 to 11, wherein the configuration related to the retransmission mechanism trigger event of the model data comprises event identifier information and/or timer configuration information related to the retransmission.

13. The model transmission method of any one of claims 8 to 12, further comprising: when a preset condition is satisfied,
sending the retransmission indication report of the model data to the network device, wherein the retransmission indication report of the model data instructs the network device to perform retransmission of the corresponding model data.

14. The model transmission method of claim 13, wherein the preset condition comprises at least one of:
the indication information of whether to re-establish the model data adaptation protocol layer associated with the RB(s) indicating to re-establish the model data adaptation protocol layer associated with the RB(s);
the model data adaptation protocol layer belonging to the SDAP layer, and the indication information of whether to re-establish the SDAP layer associated with the RB(s) indicating to re-establish the SDAP layer associated with the RB(s);
the model data adaptation protocol layer belonging to the PDCP layer, and the indication information of whether to re-establish the PDCP layer associated with the RB(s) indicating to re-establish the PDCP layer associated with the RB(s); or
the retransmission mechanism trigger event of the model data being triggered.

15. The model transmission method of claim 14, wherein the retransmission indication report of the model data comprises at least one of:
model type identifier(s) for which the retransmission of the model data is required to be performed;
at least one RB identifier for which the retransmission of the model data is required to be performed; or
at least one model data block identifier for which the retransmission of the model data is required to be performed.

16. The model transmission method of any one of claims 13 to 15, wherein a transmission prohibition timer is further comprised, wherein the transmission prohibition timer is configured to control a frequency of triggering the retransmission indication report of the model data.

17. The model transmission method of claim 16, wherein configuration of the transmission prohibition timer comprises at least one of:
configuration of the transmission prohibition timer that is configured by dedicated signaling;
default configuration of the transmission prohibition timer; or
configuration of the transmission prohibition timer that is configured by a system broadcast message.

18. The model transmission method of any one of claims 2 to 17, wherein the security configuration related to the transmission of the model(s) comprises at least one of:
configuration of a security algorithm of the transmission of the model(s);
indication information of a type of a base key that is used;
configuration of a base key;
a verification sequence of model data; or
a verification algorithm of model data.

19. The model transmission method of any one of claims 2 to 18, wherein the security configuration related to the transmission of the model(s) is a security configuration shared by the model(s), or the security configuration related to the transmission of the model(s) comprises security configuration(s) respectively corresponding to the model(s).

20. The model transmission method of any one of claims 1 to 19, further comprising:
receiving a model update message from the network device, wherein the model update message indicates a predefined part that is required to be updated in the model(s).

21. The model transmission method of claim 20, wherein the predefined part in the model(s) comprises at least one of:
a set of types of input data of the model(s);
a set of types of output data of the model(s);
structure requirements of the model(s); or
performance requirements of the model(s).

22. The model transmission method of claim 20 or 21, further comprising:
receiving data reception configuration information from the network device; and
updating, based on the data reception configuration information, the predefined part that is required to be updated in the model(s).

23. The model transmission method of any one of claims 1 to 22, further comprising:
receiving a radio resource control RRC message from the network device, wherein the RRC message comprises a predefined part that is required to be updated in the model(s); and
updating, based on the RRC message, the predefined part that is required to be updated in the model(s).

24. The model transmission method of any one of claims 1 to 23, wherein receiving, from the network device, the model transmission control information comprises:
receiving a control message from the network device; and
obtaining, based on the control message, the model transmission control information.

25. The model transmission method of any one of claims 1 to 24, further comprising:
before receiving, based on the model transmission control information, the model(s) from the network device,
sending a feedback message to the network device, wherein the feedback message indicates that the model transmission control information is successfully received.

26. A model transmission method, applied to a network device, comprising:
sending, to a terminal device, model transmission control information for configuring resources for transmission of model(s); and
sending, based on the model transmission control information, the model(s) to the terminal device.

27. The model transmission method of claim 26, wherein the model transmission control information comprises at least one of:
model type identifier(s);
model data size indication information;
configuration of at least one radio bearer RB that is required to be added or modified and is associated with the transmission of the model(s);
configuration of at least one RB that is required to be deleted and is associated with the transmission of the model(s); or
security configuration related to the transmission of the model(s).

28. The model transmission method of claim 27, wherein at least one of the following applies:
the model data size indication information is model data size indication information corresponding to the model type identifier(s);
the configuration of the at least one RB that is required to be added or modified and is associated with the transmission of the model(s) is configuration of RB(s), that are required to be added or modified and are associated with the transmission of the model(s), corresponding to the model type identifier(s); or
the configuration of the RB that is required to be deleted and is associated with the transmission of the model(s) is configuration of RB(s), that are required to be deleted and are associated with the transmission of the model(s), corresponding to the model type identifier(s).

29. The model transmission method of claim 27, wherein
the configuration of the at least one RB that is required to be added or modified and is associated with the transmission of the model(s) is configuration of RB(s), that are required to be added or modified and are associated with the transmission of the model(s), corresponding to RB identifier(s); and/or
the configuration of the at least one RB that is required to be deleted and is associated with the transmission of the model(s) is configuration of RB(s), that are required to be deleted and are associated with the transmission of the model(s), corresponding to RB identifier(s).

30. The model transmission method of any one of claims 27 to 29, wherein the configuration of the RB(s) associated with the transmission of the model(s) comprises at least one of:
RB identifier(s);
configuration related to a service data adaptation protocol SDAP layer associated with the RB(s);
indication information of whether to re-establish an SDAP layer associated with the RB(s);
configuration related to a packet data convergence protocol PDCP layer associated with the RB(s);
indication information of whether to re-establish a PDCP layer associated with the RB(s);
configuration related to a model data adaptation protocol layer associated with the RB(s); or
indication information of whether to re-establish a model data adaptation protocol layer associated with the RB(s).

31. The model transmission method of claim 30, wherein at least one of the following applies:
the model data adaptation protocol layer is located above the SDAP layer;
the model data adaptation protocol layer is located between the SDAP layer and the PDCP layer;
the model data adaptation protocol layer belongs to the SDAP layer; or
the model data adaptation protocol layer belongs to the PDCP layer.

32. The model transmission method of claim 30 or 31, wherein the configuration related to the model data adaptation protocol layer comprises at least one of:
information of model type identifier(s) associated with the RB(s);
model data size indication information associated with the RB(s);
information of at least one model data block identifier associated with the RB(s);
data size indication information of each of at least one model data block associated with the RB(s);
configuration related to internet protocol IP-based model data;
configuration related to compression and decompression of model data;
configuration related to segmentation and concatenation of model data;
configuration related to chunking and reassembly of model data; or
configuration related to retransmission of model data.

33. The model transmission method of claim 32, wherein the configuration related to the retransmission of the model data comprises at least one of:
indication information of whether to start a retransmission mechanism;
indication information of whether to start a retransmission mechanism with a granularity of RB;
indication information of whether to start a retransmission mechanism with a granularity of model data block identifier;
indication information of whether to allow sending a retransmission indication report of the model data;
a maximum number of retransmissions of the model data; or
configuration related to a retransmission mechanism trigger event of the model data.

34. The model transmission method of claim 33, wherein the retransmission mechanism trigger event of the model data comprises at least one of the following events:
failed verification of the model data by the terminal device;
failed reassembly of the model data by the terminal device;
failed reassembly of the model data transmitted through any RB, by the terminal device;
failed reassembly of block data of the model data by the terminal device;
after a model data reassembly timer or a model data discarding timer expires, reassembly or submission of the model data being still not completed by the terminal device;
after a timer for model data reassembly at a granularity of RB or a model data discarding timer expires, reassembly or submission of the model data associated with corresponding RB(s) being still not completed by the terminal device;
after a timer for model data reassembly at a granularity of model data block identifier or a model data discarding timer expires, reassembly or submission of corresponding block data of the model data being still not completed by the terminal device;
a low protocol layer or an upper protocol layer of the terminal device sending first indication information to the model data adaptation protocol layer, wherein the first indication information indicates that transmission of at least part of the model data is lost or indicates that transmission of at least part of the model data is unsuccessful; or
second indication information being received by the terminal device from the network device, wherein the second indication information indicates whether to re-establish the model data adaptation protocol layer associated with the corresponding RB(s).

35. The model transmission method of claim 34, wherein the low protocol layer is the SDAP layer, the PDCP layer or a radio link control RLC layer; and the upper protocol layer is the SDAP layer.

36. The model transmission method of claim 35, wherein
the model data adaptation protocol layer belongs to the SDAP layer, the low protocol layer is the PDCP layer, and the upper protocol layer is the SDAP layer or the upper protocol layer does not exist; or
the model data adaptation protocol layer belongs to the PDCP layer, the low protocol layer is the PDCP layer or the RLC layer, and the upper protocol layer is the SDAP layer.

37. The model transmission method of any one of claims 33 to 36, wherein the configuration related to the retransmission mechanism trigger event of the model data comprises event identifier information and/or timer configuration information related to the retransmission.

38. The model transmission method of any one of claims 33 to 37, further comprising: when a preset condition is satisfied,
receiving the retransmission indication report of the model data from the terminal device, wherein the retransmission indication report of the model data indicates retransmission of the corresponding model data.

39. The model transmission method of claim 38, wherein the preset condition comprises at least one of:
the indication information of whether to re-establish the model data adaptation protocol layer associated with the RB(s) indicating to re-establish the model data adaptation protocol layer associated with the RB(s);
the model data adaptation protocol layer belonging to the SDAP layer, and the indication information of whether to re-establish the SDAP layer associated with the RB(s) indicating to re-establish the SDAP layer associated with the RB(s);
the model data adaptation protocol layer belonging to the PDCP layer, and the indication information of whether to re-establish the PDCP layer associated with the RB(s) indicating to re-establish the PDCP layer associated with the RB(s); or
the retransmission mechanism trigger event of the model data being triggered.

40. The model transmission method of claim 39, wherein the retransmission indication report of the model data comprises at least one of:
model type identifier(s) for which the retransmission of the model data is required to be performed;
at least one RB identifier for which the retransmission of the model data is required to be performed; or
at least one model data block identifier for which the retransmission of the model data is required to be performed.

41. The model transmission method of any one of claims 38 to 40, wherein a transmission prohibition timer is further comprised, wherein the transmission prohibition timer is configured to control a frequency of triggering the retransmission indication report of the model data.

42. The model transmission method of claim 41, wherein configuration of the transmission prohibition timer comprises at least one of:
configuration of the transmission prohibition timer that is configured by dedicated signaling;
default configuration of the transmission prohibition timer; or
configuration of the transmission prohibition timer that is configured by a system broadcast message.

43. The model transmission method of any one of claims 27 to 42, wherein the security configuration related to the transmission of the model(s) comprises at least one of:
configuration of a security algorithm of the transmission of the model(s);
indication information of a type of a base key that is used;
configuration of a base key;
a verification sequence of model data; or
a verification algorithm of model data.

44. The model transmission method of any one of claims 27 to 43, wherein the security configuration related to the transmission of the model(s) is a security configuration shared by the model(s), or the security configuration related to the transmission of the model(s) comprises security configuration(s) respectively corresponding to the model(s).

45. The model transmission method of any one of claims 26 to 44, further comprising:
sending a model update message to the terminal device, wherein the model update message indicates, to the terminal device, a predefined part that is required to be updated in the model(s).

46. The model transmission method of claim 45, wherein the predefined part in the model(s) comprises at least one of:
a set of types of input data of the model(s);
a set of types of output data of the model(s);
structure requirements of the model(s); or
performance requirements of the model(s).

47. The model transmission method of claim 45 or 46, further comprising:
sending data reception configuration information to the terminal device, wherein the data reception configuration information instructs the terminal device to update the predefined part that is required to be updated in the model(s).

48. The model transmission method of any one of claims 26 to 47, further comprising:
sending a radio resource control RRC message to the terminal device, wherein the RRC message comprises a predefined part that is required to be updated in the model(s), and the RRC message instructs the terminal device to update the predefined part that is required to be updated in the model(s).

49. The model transmission method of any one of claims 26 to 48, wherein sending, to the terminal device, the model transmission control information comprises:
sending a control message to the terminal device, wherein the control message comprises the model transmission control information.

50. The model transmission method of any one of claims 26 to 49, further comprising:
before sending, based on the model transmission control information, the model(s) to the terminal device,
receiving a feedback message from the terminal device, wherein the feedback message indicates that the model transmission control information is successfully received by the terminal device.

51. A model transmission apparatus, comprising:
a first receiving module, configured to receive, from a network device, model transmission control information for configuring resources for transmission of model(s); and
a second receiving module, configured to receive, based on the model transmission control information, the model(s) from the network device.

52. The model transmission apparatus of claim 51, wherein the model transmission control information comprises at least one of:
model type identifier(s);
model data size indication information;
configuration of at least one radio bearer RB that is required to be added or modified and is associated with the transmission of the model(s);
configuration of at least one RB that is required to be deleted and is associated with the transmission of the model(s); or
security configuration related to the transmission of the model(s).

53. The model transmission apparatus of claim 52, wherein at least one of the following applies:
the model data size indication information is model data size indication information corresponding to the model type identifier(s);
the configuration of the at least one RB that is required to be added or modified and is associated with the transmission of the model(s) is configuration of RB(s), that are required to be added or modified and are associated with the transmission of the model(s), corresponding to the model type identifier(s); or
the configuration of the RB that is required to be deleted and is associated with the transmission of the model(s) is configuration of RB(s), that are required to be deleted and are associated with the transmission of the model(s), corresponding to the model type identifier(s).

54. The model transmission apparatus of claim 52, wherein
the configuration of the at least one RB that is required to be added or modified and is associated with the transmission of the model(s) is configuration of RB(s), that are required to be added or modified and are associated with the transmission of the model(s), corresponding to RB identifier(s); and/or
the configuration of the at least one RB that is required to be deleted and is associated with the transmission of the model(s) is configuration of RB(s), that are required to be deleted and are associated with the transmission of the model(s), corresponding to RB identifier(s).

55. The model transmission apparatus of any one of claims 52 to 54, wherein the configuration of the RB(s) associated with the transmission of the model(s) comprises at least one of:
RB identifier(s);
configuration related to a service data adaptation protocol SDAP layer associated with the RB(s);
indication information of whether to re-establish an SDAP layer associated with the RB(s);
configuration related to a packet data convergence protocol PDCP layer associated with the RB(s);
indication information of whether to re-establish a PDCP layer associated with the RB(s);
configuration related to a model data adaptation protocol layer associated with the RB(s); or
indication information of whether to re-establish a model data adaptation protocol layer associated with the RB(s).

56. The model transmission apparatus of claim 55, wherein at least one of the following applies:
the model data adaptation protocol layer is located above the SDAP layer;
the model data adaptation protocol layer is located between the SDAP layer and the PDCP layer;
the model data adaptation protocol layer belongs to the SDAP layer; or
the model data adaptation protocol layer belongs to the PDCP layer.

57. The model transmission apparatus of claim 55 or 56, wherein the configuration related to the model data adaptation protocol layer comprises at least one of:
information of model type identifier(s) associated with the RB(s);
model data size indication information associated with the RB(s);
information of at least one model data block identifier associated with the RB(s);
data size indication information of each of at least one model data block associated with the RB(s);
configuration related to internet protocol IP-based model data;
configuration related to compression and decompression of model data;
configuration related to segmentation and concatenation of model data;
configuration related to chunking and reassembly of model data; or
configuration related to retransmission of model data.

58. The model transmission apparatus of claim 57, wherein the configuration related to the retransmission of the model data comprises at least one of:
indication information of whether to start a retransmission mechanism;
indication information of whether to start a retransmission mechanism with a granularity of RB;
indication information of whether to start a retransmission mechanism with a granularity of model data block identifier;
indication information of whether to allow sending a retransmission indication report of the model data;
a maximum number of retransmissions of the model data; or
configuration related to a retransmission mechanism trigger event of the model data.

59. The model transmission apparatus of claim 58, wherein the retransmission mechanism trigger event of the model data comprises at least one of the following events:
failed verification of the model data;
failed reassembly of the model data;
failed reassembly of the model data transmitted through any RB;
failed reassembly of block data of the model data;
after a model data reassembly timer or a model data discarding timer expires, reassembly or submission of the model data being still not completed;
after a timer for model data reassembly at a granularity of RB or a model data discarding timer expires, reassembly or submission of the model data associated with corresponding RB(s) being still not completed;
after a timer for model data reassembly at a granularity of model data block identifier or a model data discarding timer expires, reassembly or submission of corresponding block data of the model data being still not completed;
a low protocol layer or an upper protocol layer sending first indication information to the model data adaptation protocol layer, wherein the first indication information indicates that transmission of at least part of the model data is lost or indicates that transmission of at least part of the model data is unsuccessful; or
second indication information being received from the network device, wherein the second indication information indicates whether to re-establish the model data adaptation protocol layer associated with the corresponding RB(s).

60. The model transmission apparatus of claim 59, wherein the low protocol layer is the SDAP layer, the PDCP layer or a radio link control RLC layer; and the upper protocol layer is the SDAP layer.

61. The model transmission apparatus of claim 60, wherein
the model data adaptation protocol layer belongs to the SDAP layer, the low protocol layer is the PDCP layer, and the upper protocol layer is the SDAP layer or the upper protocol layer does not exist; or
the model data adaptation protocol layer belongs to the PDCP layer, the low protocol layer is the PDCP layer or the RLC layer, and the upper protocol layer is the SDAP layer.

62. The model transmission apparatus of any one of claims 58 to 61, wherein the configuration related to the retransmission mechanism trigger event of the model data comprises event identifier information and/or timer configuration information related to the retransmission.

63. The model transmission apparatus of any one of claims 58 to 62, further comprising a sending module, configured to: when a preset condition is satisfied,
send the retransmission indication report of the model data to the network device, wherein the retransmission indication report of the model data instructs the network device to perform retransmission of the corresponding model data.

64. The model transmission apparatus of claim 63, wherein the preset condition comprises at least one of:
the indication information of whether to re-establish the model data adaptation protocol layer associated with the RB(s) indicating to re-establish the model data adaptation protocol layer associated with the RB(s);
the model data adaptation protocol layer belonging to the SDAP layer, and the indication information of whether to re-establish the SDAP layer associated with the RB(s) indicating to re-establish the SDAP layer associated with the RB(s);
the model data adaptation protocol layer belonging to the PDCP layer, and the indication information of whether to re-establish the PDCP layer associated with the RB(s) indicating to re-establish the PDCP layer associated with the RB(s); or
the retransmission mechanism trigger event of the model data being triggered.

65. The model transmission apparatus of claim 64, wherein the retransmission indication report of the model data comprises at least one of:
model type identifier(s) for which the retransmission of the model data is required to be performed;
at least one RB identifier for which the retransmission of the model data is required to be performed; or
at least one model data block identifier for which the retransmission of the model data is required to be performed.

66. The model transmission apparatus of any one of claims 63 to 65, further comprising a transmission prohibition timer, wherein the transmission prohibition timer is configured to control a frequency of triggering the retransmission indication report of the model data.

67. The model transmission apparatus of claim 66, wherein configuration of the transmission prohibition timer comprises at least one of:
configuration of the transmission prohibition timer that is configured by dedicated signaling;
default configuration of the transmission prohibition timer; or
configuration of the transmission prohibition timer that is configured by a system broadcast message.

68. The model transmission apparatus of any one of claims 52 to 67, wherein the security configuration related to the transmission of the model(s) comprises at least one of:
configuration of a security algorithm of the transmission of the model(s);
indication information of a type of a base key that is used;
configuration of a base key;
a verification sequence of model data; or
a verification algorithm of model data.

69. The model transmission apparatus of any one of claims 52 to 68, wherein the security configuration related to the transmission of the model(s) is a security configuration shared by the model(s), or the security configuration related to the transmission of the model(s) comprises security configuration(s) respectively corresponding to the model(s).

70. The model transmission apparatus of any one of claims 51 to 69, wherein the first receiving module is further configured to:
receive a model update message from the network device, wherein the model update message indicates a predefined part that is required to be updated in the model(s).

71. The model transmission apparatus of claim 70, wherein the predefined part in the model(s) comprises at least one of:
a set of types of input data of the model(s);
a set of types of output data of the model(s);
structure requirements of the model(s); or
performance requirements of the model(s).

72. The model transmission apparatus of claim 70 or 71, wherein the second receiving module is further configured to:
receive data reception configuration information from the network device; and
update, based on the data reception configuration information, the predefined part that is required to be updated in the model(s).

73. The model transmission apparatus of any one of claims 51 to 72, wherein the second receiving module is further configured to:
receive a radio resource control RRC message from the network device, wherein the RRC message comprises a predefined part that is required to be updated in the model(s); and
update, based on the RRC message, the predefined part that is required to be updated in the model(s).

74. The model transmission apparatus of any one of claims 51 to 73, wherein the first receiving module is specifically configured to:
receive a control message from the network device; and
obtain, based on the control message, the model transmission control information.

75. The model transmission apparatus of any one of claims 51 to 74, further comprising a sending module, configured to:
before receiving, based on the model transmission control information, the model(s) from the network device,
send a feedback message to the network device, wherein the feedback message indicates that the model transmission control information is successfully received.

76. A model transmission apparatus, comprising:
a first sending module, configured to send, to a terminal device, model transmission control information for configuring resources for transmission of model(s); and
a second sending module, configured to send, based on the model transmission control information, the model(s) to the terminal device.

77. The model transmission apparatus of claim 76, wherein the model transmission control information comprises at least one of:
model type identifier(s);
model data size indication information;
configuration of at least one radio bearer RB that is required to be added or modified and is associated with the transmission of the model(s);
configuration of at least one RB that is required to be deleted and is associated with the transmission of the model(s); or
security configuration related to the transmission of the model(s).

78. The model transmission apparatus of claim 77, wherein at least one of the following applies:
the model data size indication information is model data size indication information corresponding to the model type identifier(s);
the configuration of the at least one RB that is required to be added or modified and is associated with the transmission of the model(s) is configuration of RB(s), that are required to be added or modified and are associated with the transmission of the model(s), corresponding to the model type identifier(s); or
the configuration of the RB that is required to be deleted and is associated with the transmission of the model(s) is configuration of RB(s), that are required to be deleted and are associated with the transmission of the model(s), corresponding to the model type identifier(s).

79. The model transmission apparatus of claim 77, wherein
the configuration of the at least one RB that is required to be added or modified and is associated with the transmission of the model(s) is configuration of RB(s), that are required to be added or modified and are associated with the model(s), corresponding to RB identifier(s); and/or
the configuration of the at least one RB that is required to be deleted and is associated with the transmission of the model(s) is configuration of RB(s), that are required to be deleted and are associated with the transmission of the model(s), corresponding to RB identifier(s).

80. The model transmission apparatus of any one of claims 77 to 79, wherein the configuration of the RB(s) associated with the transmission of the model(s) comprises at least one of:
RB identifier(s);
configuration related to a service data adaptation protocol SDAP layer associated with the RB(s);
indication information of whether to re-establish an SDAP layer associated with the RB(s);
configuration related to a packet data convergence protocol PDCP layer associated with the RB(s);
indication information of whether to re-establish a PDCP layer associated with the RB(s);
configuration related to a model data adaptation protocol layer associated with the RB(s); or
indication information of whether to re-establish a model data adaptation protocol layer associated with the RB(s).

81. The model transmission apparatus of claim 80, wherein at least one of the following applies:
the model data adaptation protocol layer is located above the SDAP layer;
the model data adaptation protocol layer is located between the SDAP layer and the PDCP layer;
the model data adaptation protocol layer belongs to the SDAP layer; or
the model data adaptation protocol layer belongs to the PDCP layer.

82. The model transmission apparatus of claim 80 or 81, wherein the configuration related to the model data adaptation protocol layer comprises at least one of:
information of model type identifier(s) associated with the RB(s);
model data size indication information associated with the RB(s);
information of at least one model data block identifier associated with the RB(s);
data size indication information of each of at least one model data block associated with the RB(s);
configuration related to internet protocol IP-based model data;
configuration related to compression and decompression of model data;
configuration related to segmentation and concatenation of model data;
configuration related to chunking and reassembly of model data; or
configuration related to retransmission of model data.

83. The model transmission apparatus of claim 82, wherein the configuration related to the retransmission of the model data comprises at least one of:
indication information of whether to start a retransmission mechanism;
indication information of whether to start a retransmission mechanism with a granularity of RB;
indication information of whether to start a retransmission mechanism with a granularity of model data block identifier;
indication information of whether to allow sending a retransmission indication report of the model data;
a maximum number of retransmissions of the model data; or
configuration related to a retransmission mechanism trigger event of the model data.

84. The model transmission apparatus of claim 83, wherein the retransmission mechanism trigger event of the model data comprises at least one of the following events:
failed verification of the model data by the terminal device;
failed reassembly of the model data by the terminal device;
failed reassembly of the model data transmitted through any RB, by the terminal device;
failed reassembly of block data of the model data by the terminal device;
after a model data reassembly timer or a model data discarding timer expires, reassembly or submission of the model data being still not completed by the terminal device;
after a timer for model data reassembly at a granularity of RB or a model data discarding timer expires, reassembly or submission of the model data associated with corresponding RB(s) being still not completed by the terminal device;
after a timer for model data reassembly at a granularity of model data block identifier or a model data discarding timer expires, reassembly or submission of corresponding block data of the model data being still not completed by the terminal device;
a low protocol layer or an upper protocol layer of the terminal device sending first indication information to the model data adaptation protocol layer, wherein the first indication information indicates that transmission of at least part of the model data is lost or indicates that transmission of at least part of the model data is unsuccessful; or
second indication information being received by the terminal device from the network device, wherein the second indication information indicates whether to re-establish the model data adaptation protocol layer associated with the corresponding RB(s).

85. The model transmission apparatus of claim 84, wherein the low protocol layer is the SDAP layer, the PDCP layer or a radio link control RLC layer; and the upper protocol layer is the SDAP layer.

86. The model transmission apparatus of claim 85, wherein
the model data adaptation protocol layer belongs to the SDAP layer, the low protocol layer is the PDCP layer, and the upper protocol layer is the SDAP layer or the upper protocol layer does not exist; or
the model data adaptation protocol layer belongs to the PDCP layer, the low protocol layer is the PDCP layer or the RLC layer, and the upper protocol layer is the SDAP layer.

87. The model transmission apparatus of any one of claims 83 to 86, wherein the configuration related to the retransmission mechanism trigger event of the model data comprises event identifier information and/or timer configuration information related to the retransmission.

88. The model transmission apparatus of any one of claims 83 to 87, further comprising a receiving module, configured to: when a preset condition is satisfied,
receive the retransmission indication report of the model data from the terminal device, wherein the retransmission indication report of the model data indicates retransmission of the corresponding model data.

89. The model transmission apparatus of claim 88, wherein the preset condition comprises at least one of:
the indication information of whether to re-establish the model data adaptation protocol layer associated with the RB(s) indicating to re-establish the model data adaptation protocol layer associated with the RB(s);
the model data adaptation protocol layer belonging to the SDAP layer, and the indication information of whether to re-establish the SDAP layer associated with the RB(s) indicating to re-establish the SDAP layer associated with the RB(s);
the model data adaptation protocol layer belonging to the PDCP layer, and the indication information of whether to re-establish the PDCP layer associated with the RB(s) indicating to re-establish the PDCP layer associated with the RB(s); or
the retransmission mechanism trigger event of the model data being triggered.

90. The model transmission apparatus of claim 89, wherein the retransmission indication report of the model data comprises at least one of:
model type identifier(s) for which the retransmission of the model data is required to be performed;
at least one RB identifier for which the retransmission of the model data is required to be performed; or
at least one model data block identifier for which the retransmission of the model data is required to be performed.

91. The model transmission apparatus of any one of claims 88 to 90, wherein a transmission prohibition timer is further comprised, wherein the transmission prohibition timer is configured to control a frequency of triggering the retransmission indication report of the model data.

92. The model transmission apparatus of claim 91, wherein configuration of the transmission prohibition timer comprises at least one of:
configuration of the transmission prohibition timer that is configured by dedicated signaling;
default configuration of the transmission prohibition timer; or
configuration of the transmission prohibition timer that is configured by a system broadcast message.

93. The model transmission apparatus of any one of claims 77 to 92, wherein the security configuration related to the transmission of the model(s) comprises at least one of:
configuration of a security algorithm of the transmission of the model(s);
indication information of a type of a base key that is used;
configuration of a base key;
a verification sequence of model data; or
a verification algorithm of model data.

94. The model transmission apparatus of any one of claims 77 to 93, wherein the security configuration related to the transmission of the model(s) is a security configuration shared by the model(s), or the security configuration related to the transmission of the model(s) comprises security configuration(s) respectively corresponding to the model(s).

95. The model transmission apparatus of any one of claims 76 to 94, wherein the first sending module is further configured to:
send a model update message to the terminal device, wherein the model update message indicates, to the terminal device, a predefined part that is required to be updated in the model(s).

96. The model transmission apparatus of claim 95, wherein the predefined part in the model(s) comprises at least one of:
a set of types of input data of the model(s);
a set of types of output data of the model(s);
structure requirements of the model(s); or
performance requirements of the model(s).

97. The model transmission apparatus of claim 95 or 96, wherein the second sending module is further configured to:
send data reception configuration information to the terminal device, wherein the data reception configuration information instructs the terminal device to update the predefined part that is required to be updated in the model(s).

98. The model transmission apparatus of any one of claims 76 to 97, wherein the second sending module is further configured to:
send a radio resource control RRC message to the terminal device, wherein the RRC message comprises a predefined part that is required to be updated in the model(s), and the RRC message instructs the terminal device to update the predefined part that is required to be updated in the model(s).

99. The model transmission apparatus of any one of claims 76 to 98, wherein the first sending module is specifically configured to:
send a control message to the terminal device, wherein the control message comprises the model transmission control information.

100. The model transmission apparatus of any one of claims 76 to 99, further comprising a receiving module, configured to:
before sending, based on the model transmission control information, the model(s) to the terminal device,
receive a feedback message from the terminal device, wherein the feedback message indicates that the model transmission control information is successfully received by the terminal device.

101. A terminal device, comprising:
a transceiver;
a processor; and
a memory for storing computer executable instructions,
wherein the processor is configured to execute the computer executable instructions stored in the memory, to cause the processor to perform the model transmission method of any one of claims 1 to 25.

102. A network device, comprising:
a transceiver;
a processor; and
a memory for storing computer executable instructions,
wherein the processor is configured to execute the computer executable instructions stored in the memory, to cause the processor to perform the model transmission method of any one of claims 26 to 50.

103. A computer readable storage medium, having stored thereon computer executable instructions that, when executed by a processor, cause a computer to perform the model transmission method of any one of claims 1 to 25 or claims 26 to 50.

104. A computer program product, comprising a computer program that, when executed by a processor, causes a computer to perform the model transmission method of any one of claims 1 to 25 or claims 26 to 50.
